# EUROPÄISCHE PATENTSCHRIFT

(11) **EP 3 970 248 B1**
(45) Veröffentlichungstag und Bekanntmachung des Hinweises auf die Patenterteilung: **29.01.2025**
(21) Anmeldenummer: 20724791.7
(22) Anmeldetag: 05.05.2020
(51) Int. Cl.: H02B 1/28, H02B 13/025, H02B 1/30

(54) **RAHMEN FÜR EIN EXPLOSIONSGESCHÜTZTES GEHÄUSE**
FRAME FOR AN EXPLOSION-PROOF HOUSING
CADRE POUR UN BOÎTIER ANTI-DÉFLAGRANT

(30) Priorität: 17.05.2019 DE 102019113195
(43) Veröffentlichungstag der Anmeldung: 23.03.2022
(73) Patentinhaber: R. STAHL Schaltgeräte GmbH, 74638 Waldenburg (DE)
(72) Erfinder: ARNHOLD, Thorsten, 74629 Pfedelbach (DE)
(74) Vertreter: Rüger Abel Patentanwälte PartGmbB
(86) Internationale Anmeldenummer: PCT/EP2020/062462
(87) Internationale Veröffentlichungsnummer: WO 2020/233982

(56) Entgegenhaltungen:
- EP-A2- 2 842 609
- WO-A1-2016/070874
- DE-A1- 102017 112 159
- E.T.A. S.P.A.: "ETA Hauptkatalog 2014 - Enclosure solutions industrial and electronic applications", 16 July 2014 (2014-07-16), XP055719235, Retrieved from the Internet <URL:https://issuu.com/eta_spa/docs/eta_gc_release_20_de> [retrieved on 20200730]

## Beschreibung

Die Erfindung betrifft das Gebiet der explosionsgeschützten Gehäuse.

Aus dem Stand der Technik sind explosionsgeschützte Gehäuse bekannt. DE 10 2017 112 159 A1 beispielsweise offenbart ein Gehäuse mit einer Gehäusewand mit inneren Hohlräumen, die einerseits zu Druckentlastung des Innenraums und andererseits zur Erhöhung der Gestaltfestigkeit der Gehäusewand beitragen.

In EP 2 842 609 A2 wird eine Druckentlastungsvorrichtung für ein Schutzgehäuse zur Druckfesten Kapselung von Betriebsmitteln offenbart. Außerdem wird in der WO 2016/070874 A1 ein Flammschutzfilter beschrieben. Ferner werden in "ETA Hauptkatalog 2014 - Enclosure solutions industrial and electronic applications*"* verschiedene Schaltschränke in Rahmenbauweise offenbart.

Es besteht ein Bedarf an Gehäusen mit dünnen Wandstärken sowie großen Gehäuseabmaßen bei gleichzeitiger Sicherstellung der druckfesten Kapselung.

Erfindungsgemäß wird ein Rahmen für ein explosionsgeschütztes Gehäuse nach Anspruch 1, ein explosionsgeschütztes Gehäuse nach Anspruch 8 und ein Verfahren nach Anspruch 16 bereitgestellt:

Das explosionsgeschützte Gehäuse, für welches der Rahmen bestimmt ist, ist bevorzugt nach der Explosionsschutzart druckfeste Kapselung ausgebildet. Das Gehäuse umgrenzt einen Innenraum. In dem Innenraum können Betriebsgeräte angeordnet werden. Diese können Zündfunken bilden. Das Gehäuse ist dazu eingerichtet bei einer im Gehäuseinnenraum auftretenden Explosion, Gas und/oder Partikel allenfalls derart abgekühlt aus dem Gehäuse zu entlassen, dass das Gas und/oder die Partikel die Atmosphäre außerhalb des Gehäuses nicht entzünden können.

Der Rahmen weist Tragelemente auf. Der Rahmen kann beispielsweise aus länglichen Tragelementen aufgebaut sein. Tragelemente, aus welchen der Rahmen beispielsweise aufgebaut sein kann, können Profile, insbesondere Hohlprofile, beispielsweise Vierkantrohre, sein. Unter den Tragelementen können insbesondere waagerecht angeordnete Tragelemente, die Träger oder Holme bilden, und/oder vertikal angeordnete Tragelemente sein, die Stützen bilden, und/oder Tragelemente, die Streben bilden und beispielsweise diagonal angeordnet sind. Von den Tragelementen erstrecken sich vorzugsweise zumindest manche entlang der Kanten des Gehäuses. Ausführungsformen können Tragelemente aufweisen, welche selbst rahmenförmig sind. Diese können beispielsweise aus Hohlprofilen aufbaut sind.

Von den Tragelementen begrenzt wenigstens eines einen Tragelementinnenraum. Solche Tragelemente können auch Aufnahmetragelemente genannt werden. Bevorzugt sind die Tragelemente innen hohl. Wenigstens eines der Aufnahmetragelemente begrenzt eine Öffnung. Durch die Öffnung ist der Gehäuseinnenraum mit dem Tragelementinnenraum des Aufnahmetragelements fluidisch verbunden, um Explosionsdruck durch das Ableiten von verbranntem und ungebranntem Gas aus dem Gehäuseinnenraum in den Tragelementinnenraum abzubauen.

Der Rahmen, der zumindest in Ausführungsformen auch als Skeletträger bezeichnet werden kann, hat einerseits eine tragende und stabilisierende Funktion für den gesamten Gehäuseaufbau und andererseits die Funktion des Druckabbaus aufgrund des mit dem Gehäuseinnenraum verbundenen Tragelementinnenraums. Damit sind dünne Wandstärken sowie große Gehäuseabmaße möglich bei gleichzeitiger Sicherstellung der druckfesten Kapselung.

Der Rahmen ist bevorzugt skelettartig aus Tragelementen aufgebaut und dreidimensional. Der Rahmen kann aus länglichen Tragelementen, und gegebenenfalls Elemente zur Verbindung der Tragelemente, zusammengesetzte Seitenrahmenabschnitte aufweisen, welche eine ebene Fläche umgrenzen. Diese Seitenrahmenabschnitte können in einfachen Ausführungsformen von vier rechtwinklig zueinander ausgerichteten länglichen Tragelementen gebildet sein, welche in einer Ebene angeordnet sind.

Ausführungsformen des Rahmens können mittels Ausführungsformen eines erfindungsgemäßen Baukastensystems hergestellt werden. Das Baukastensystem zeichnet sich dadurch aus, dass mit einer bestimmten Anzahl unterschiedlicher Grundelementtypen oder -modultypen eine Vielzahl (bevorzugt drei oder mehr) an Rahmentypen aufgebaut werden können, welche sich untereinander in der Größe unterscheiden.

Das erfindungsgemäße Verfahren zum Herstellen des Rahmens weist den Schritt des Anordnens von Tragelementen zu dem Rahmen oder wenigstens einer Teilstruktur des Rahmens auf. Die Tragelemente werden befestigt, bevorzugt aneinander, so dass ein anschließendes oder mit dem Befestigenden iteratives Ausrichten möglich ist. Der Rahmen oder die Teilstruktur des Rahmens wird ausgerichtet. Die Ausrichtung des Rahmens oder der Teilstruktur wird durch starres Verbinden der Tragelemente fixiert. Auf diese Weise können grobe Toleranzen der Rahmenelemente beim Ausrichten ausgeglichen werden.

Weitere bevorzugte Merkmale oder Ausführungsformen des erfindungsgemäßen Rahmens, des erfindungsgemäßen Gehäuses, des erfindungsgemäßen Baukastensystems sowie des erfindungsgemäßen Verfahrens ergeben sich aus der folgenden Beschreibung:

In dem Rahmen können Tragelementinnenräume von Aufnahmetragelementen, also den Tragelementen welche ein Tragelementinnenraum begrenzen, untereinander fluidisch verbunden sein. Auf Grund der Verbindung wird ein Gasaustausch zwischen den Tragelementinnenräumen ermöglicht, bevorzugt, ohne dass das Gas einen Umweg durch den Gehäuseinnenraum nehmen muss, wenn es von einem Tragelementinnenraum zu einem anderen Tragelementinnenraum strömt.

Tragelemente können verbunden sein, um mit ihren Tragelementinnenräumen in der Anordnung verbundener Tragelemente in den Tragelementinnenräumen zusammenhängendes Zwischenvolumen zu bilden.

Die verbundenen Tragelementinnenräume können einen unverzweigten oder einen ein- oder mehrfach verzweigten Kanal bilden, der als Schluckraum für eine aus dem Innenraum des Gehäuses kommende Druckwelle dient. Der Kanal kann dem zünddurchschlagsicheren Gasaustausch zwischen dem Gehäuseinnenraum und der Umgebung des Gehäuses dienen. Zumindest ein Teil des Kanalquerschnitts ist vorzugsweise frei von porösem Material. Dies vermindert den Strömungswiderstand durch den Kanal, so dass bei einer Explosion im Innenraum des Gehäuses unverbranntes oder nicht entzündetes Gas, auf Grund der Ausdehnung von gezündetem Gas aus dem Innenraum des Gehäuses durch den Kanal in die Umgebung schieben kann, ohne Widerstand von den Querschnitt des Kanals vollständig ausfüllendem Material. Bei alledem muss das Gas dennoch gegen den Widerstand der bevorzugt zünddurchschlagsicheren Elemente, mit denen die Öffnungen zum Innenraum oder die Ausblasöffnung verschlossen werden, aus dem Innenraum gedrückt werden.

Es müssen nicht unbedingt alle Aufnahmetragelemente eine Öffnung begrenzen, durch welche der Gehäuseinnenraum mit dem Tragelementinnenraum fluidisch verbunden ist.

Erfindungsgemäß legt der Rahmen eine Ausblasöffnung fest, durch welche der Gehäuseinnenraum gegebenenfalls indirekt über einen oder mehrere Tragelementinnenräume oder direkt mit der Umgebung des Gehäuses zünddurchschlagsicher fluidisch verbunden ist. Die fluidische Verbindung kann in Ausführungsformen erst nach dem Zerstören oder Absprengen oder sonstigen Freigeben eines Schutzelements, z.B. einer Berstscheibe oder eines sonstigen Schutzkörpers, offen sein, welches die Aufgabe hat, die Ausblasöffnung gegen Umwelteinflüsse wie Schmutz und/oder Feuchtigkeit abzuschirmen. Wenn die Ausblasöffnung mit einem Druckentlastungskörper verschlossen ist, kann das vorzugsweise vorhandene Schutzelement den Druckentlastungskörper vor Umwelteinflüssen abschirmen, um dem Druckentlastungskörper davor zu schützen, Schmutz und/oder Feuchtigkeit zugesetzt zu werden. Während die fluidische Verbindung des Gehäuseinnenraums über wenigstens einen Tragelementinnenraum, über die Ausblasöffnung mit der Umgebung des Gehäuses in Ausführungsformen stets offen ist, kann die Verbindung in anderen Ausführungsformen bei einer Explosion, z.B. durch Zerstören einer Berstscheibe, automatisch geöffnet werden. In wieder anderen Ausführungsformen ist der Kanal aus fluidisch verbundenen Tragelementinnenräumen gegen die Umgebung des Gehäuses geschlossen, so dass der Kanal bei einer Explosion Gas schluckt, ohne dieses an die Umgebung abzugeben.

Die Ausblasöffnung kann mit einem Druckentlastungskörper, zum Beispiel einem Gitter oder einer Gitteranordnung, zünddurchschlagsicher verschlossen sein. Ein vorzugsweise vorhandenes Schutzelement kann dafür sorgen, dass engen Poren eines zünddurchschlagsicheren Druckentlastungskörpers auch in schmutziger, beispielsweise staubbelasteter, oder feuchter Umgebung nicht mit Schmutz und/oder Flüssigkeit zugesetzt werden.
In Ausführungsformen kann wenigstens ein Tragelement, beispielsweise ein Tragelement, welches eine oder welches keine Öffnung zur Verbindung zwischen Tragelementinnenraum und Gehäuseinnenraum aufweist, eine Ausblasöffnung festlegen. Die von dem Tragelement festgelegte Ausblasöffnung kann, wie oben beschrieben, mit einem Druckentlastungskörper verschlossen sein, wobei der Druckentlastungskörper zünddurchschlagsicher sein kann, um die Ausblasöffnung zünddurchschlagsicher zu verschließen. Die von dem Tragelement festgelegte Ausblasöffnung kann mit einem Schutzelement verschlossen sein, wobei der Verschluss im Falle einer Explosion im Innenraum des Gehäuses oder im Zwischenvolumen durch explosionsbedingte Zerstörung oder Absprengung des Schutzelements geöffnet wird, um die Verbindung durch die Ausblasöffnung freizugeben.

Ein oder mehrere Tragelemente können einen, bevorzugt zünddurchschlagsicheren, beispielsweise rohrförmigen, Mantel aufweisen, mit welchem das Tragelement den Tragelementinnenraum, beispielsweise quer zur einer Erstreckungsrichtung, insbesondere Längserstreckungsrichtung, des Tragelements begrenzt.

Die Öffnung in einem Aufnahmetragelement zur fluidischen Verbindung zwischen Innenraum des Gehäuses und Tragelementinnenraum ist vorzugsweise mit einem gasdurchlässigen Druckentlastungskörper verschlossen. Der Druckentlastungskörper muss die Öffnung nicht unbedingt zünddurchschlagsicher verschließen. Es reicht in Ausführungsformen aus, wenn der Druckentlastungskörper einen Teil der kinetischen Energie und/oder Wärmeenergie des durch den Druckentlastungskörper strömenden Gases aufnimmt. Zünddurchschlagsicherheit einer Verbindung des Innenraums des Gehäuses mit der Umgebung durch das Zwischenvolumen kann in solchen Ausführungsformen durch zünddurchschlagsichere Ausblasöffnungen erreicht werden.

In anderen Ausführungsformen kann der Druckentlastungskörper jedoch eine Flammensperre bilden, indem der Druckentlastungskörper beispielsweise offene Poren aufweist, welche zünddurchschlagsichere Spalte bilden. Die Öffnung in dem Aufnahmetragelement kann mit einem solchen Druckentlastungskörper zünddurchschlagsicher geschlossen sein. Der Druckentlastungskörper kann beispielsweise mit einem Gitter oder einer Gitteranordnung gebildet sein. Alternativ kann der Druckentlastungskörper beispielsweise ein Drahtwirrkörper, ein Metall- oder Kunststoffschaum oder dergleichen sein.

Wenn zusätzlich zu den zünddurchschlagsicheren Druckentlastungskörpern in der Verbindung zwischen Gehäuseinnenraum und Zwischenvolumen auch die Ausblasöffnungen zünddurchschlagsicher verschlossen sind, kann eine Explosion des Gases in dem Zwischenvolumen nicht in den Innenraum des Gehäuses und auch nicht in die Umgebung durchzünden. Wenn eine Explosion des Gases in dem Zwischenvolumen verhindert werden kann, kann gegebenenfalls auf eine Zünddurchschlagsicherheit der Ausblasöffnungen verzichtet werden und nur die Verbindung zwischen dem Innenraum des Gehäuses und dem Zwischenvolumen in den Tragelementen zünddurchschlagsicher sein.

Zünddurchschlagsicher verschlossen bedeutet, dass zumindest kein Gas oder Partikel durch den zünddurchschlagsicheren Verschluss hindurchtreten können, welche eine Temperatur aufweisen, so dass das Gas oder die Partikel eine Atmosphäre hinter dem zünddurchschlagsicheren Verschluss, insbesondere in der Umgebung des Gehäuses, entzünden können.

Das erfindungsgemäße explosionsgeschützte Gehäuse weist einen erfindungsgemäßen Rahmen auf. An dem Rahmen sind bevorzugt Flächenelemente (diese können auch als Schließelemente bezeichnet werden) befestigt, um das Gehäuse zu schließen. Die Flächenelemente sind bevorzugt außen an dem Rahmen befestigt.

Besonders bevorzugt sind an dem Gehäuse plattenförmige Flächenelemente befestigt, um das Gehäuse zu schließen.

Die Flächenelemente können mit dem Rahmen beispielsweise verschweißt und/oder verklebt sein. Aneinander angrenzende Flächenelemente können miteinander verbunden insbesondere verschweißt oder verklebt sein. In Ausführungsformen kann das Gehäuse u.a. auf diese Weise zünddurchschlagsicher verschlossen sein.

In bevorzugten Ausführungsformen sind wenigstens zwei Flächenelemente nahtlos einstückig miteinander verbunden. In bevorzugten Ausführungsformen weist das Gehäuse wenigstens eine gebogene oder abgekantete Platte zum Schlie-βen wenigstens zweier Seiten des Gehäuses auf. Die Seiten schließen vorzugsweise einen Winkel von zum Beispiel 90° ein. Auf diese Weise kann auf wenigstens eine längliche Schweißnaht zwischen zwei Flächenelementen verzichtet werden.

Bevorzugt sind der Rahmen und die Flächenelemente aus gleichem Material. Auf diese Weise können Spannungen aufgrund eine Temperaturwechsels vermieden werden, da das Rahmen und das Plattenmaterial bzw. das Flächenelementmaterial dem gleichen thermischen Ausdehnungskoeffizienten aufweisen.

Weitere vorteilhafte Ausführungsformen und Merkmale ergeben sich aus den Unteransprüchen, der nachfolgenden Beschreibung sowie den Figuren.

Es zeigen:
Figur 1 - ein Ausführungsbeispiel eines erfindungsgemäßen Gehäuses,
Figur 2 - ein Ausführungsbeispiel eines erfindungsgemäßen Rahmens beispielsweise des erfindungsgemäßen Gehäuses gemäß Figur 1 in perspektivischer Ansicht,
Figur 3 - ein Ausführungsbeispiel eines Tragelements, wie es beispielsweise in dem erfindungsgemäßen Rahmen gemäß Figur 2 eingesetzt sein kann, in perspektivischer Ansicht,
Figur 4 - das Tragelement gemäß Figur 3 mit aufgeschweißten beispielhaften Druckentlastungskörpern,
Figur 5 - eine perspektivische Ansicht des Gehäuses gemäß Figur 1 mit Blick in den Innenraum bei abgenommen Deckel,
Figur 6 - ein Ausführungsbeispiel eines Deckels, mit welchem das Gehäuse gemäß Figur 1 geschlossen sein kann in perspektivischer Ansicht,
Figur 7 - eine Querschnittsansicht durch ein weiteres Ausführungsbeispiel eines Tragelements,
Figur 8 - eine Querschnittsansicht durch noch ein weiteres Ausführungsbeispiel eines Tragelements,
Figuren 9a, 9b - eine Veranschaulichung eines Verfahrens zur Herstellung von Flächenelementen erfindungsgemäßer Gehäuse,
Figuren 10a bis 10d - Module eines beispielhaften Baukastensystems,
Figur 11a - ein Beispiel eines Tragrahmens zusammengesetzt aus den Modulen gemäß Figuren 10a bis 10d,
Figur 11b - eine Schnittdarstellung durch einen Abschnitt des Tragrahmens gemäß Figur 11b,
Figur 12 - ein Beispiel eines Gehäuses mit dem Tragrahmen gemäß Figur 11a,
Figur 13a bis 13d - eine Abwandlung des Baukastensystems gemäß Figuren 10a bis 10d,
Figuren 14a bis 14g - eine weitere Ausführungsbeispiel eines erfindungsgemäßen Baukastensystems und eine daraus aufgebautes Beispiel eines Tragrahmens,
Figur 15a - ein Rahmen gemäß eines weiteren Ausführungsbeispiels eines Baukastensystems,
Figuren 15b bis 15d - Elemente des Rahmens gemäß Figur 15a bzw. des Gehäuses gemäß Figur 15e,
Figur 15e - ein Gehäuse aufgebaut mit dem Rahmen gemäß Figur 15a und
Figur 16 - ein Ablaufschema eines Beispiels eines erfindungsgemäßen Verfahrens.

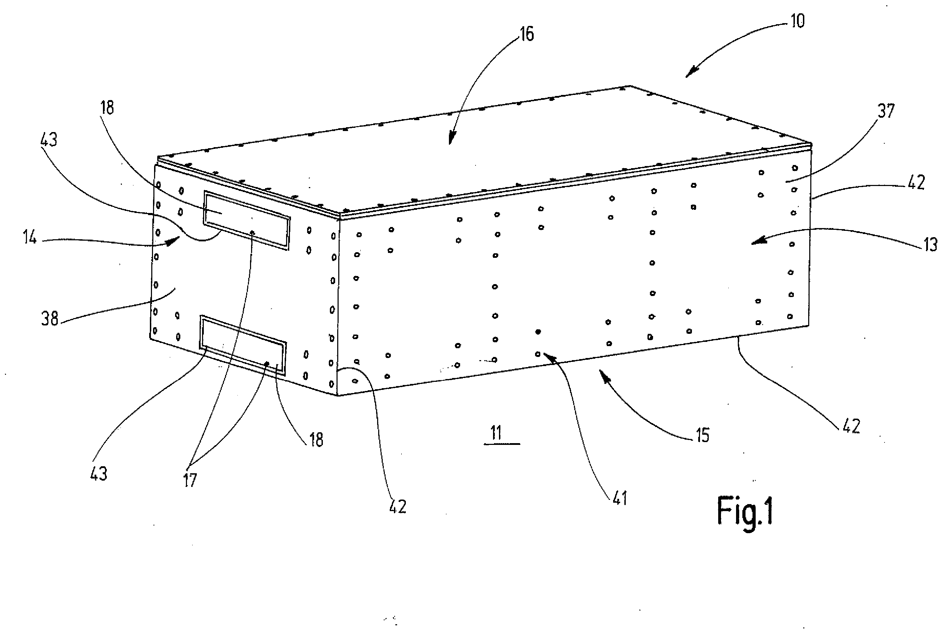

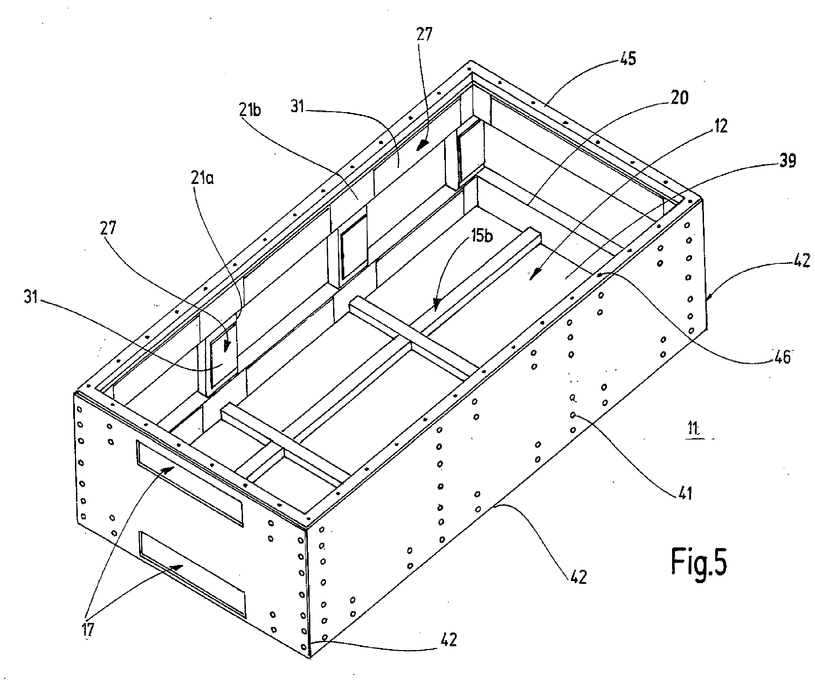

Ein Ausführungsbeispiel des erfindungsgemäßen explosionsgeschützte Gehäuses 10 ist in Figur 1 gezeigt, das für den Einsatz in explosionsgefährdeter Umgebung 11 eingerichtet ist. Das Gehäuse 10 dient der Aufnahme von Komponenten, beispielsweise elektronischen oder elektrischen Bauelementen, die im Betrieb Zündquellen für ein explosives Gasgemisch bilden können. Das Gehäuse 10 umschließt einen Innenraum 12 (s. Figur 5), in dem die oben genannten Komponenten angeordnet werden können. Das erfindungsgemäße Gehäuse 10 ist bevorzugt nach der Schutzart druckfeste Kapselung ausgebildet. Dies bedeutet, dass nicht unbedingt verhindert werden muss, dass bei einer Explosion Gas oder Partikel aus dem Gehäuseinnenraum 12 nach Außen in die Umgebung 11 gelangen können. Allerdings müssen Spalte, welche von innerhalb des Gehäuses 10 nach Außen führen, derart bemessen sein, dass das Gas oder die Partikel ausreichend abkühlen, um zu verhindern, dass eine möglicherweise explosionsfähige Atmosphäre außerhalb des Gehäuses 10 entzündet wird. Bei dieser Zündschutzart muss auch die Oberflächentemperatur des Gehäuses 10 auch bei Auftreten einer Explosion im Inneren des Gehäuses 10 oder eines sonstigen (Fehler-)Ereignisses unter der Zündtemperatur der umgebenden explosionsfähigen Atmosphäre bleiben. Das Gehäuse 10 kann insbesondere der Norm EN60079-1 (Schutzart Ex d)genügen oder beispielsweise einer entsprechenden amerikanischen Norm.

Wie dargestellt, ist das erfindungsgemäße Gehäuse 10 vorzugsweise quaderförmig. Es weist einander gegenüberliegende Längsseiten 13, einander gegenüberliegende Stirnseiten 14 sowie einen Boden 15 (oder Rücken) und einen Deckel 16 (oder Vorderseite) auf. Bevorzugt ist in wenigstens einer Seite, z.B. Längsseite 13, Stirnseite 14, Boden 15 oder Deckel 16, eine Ausblasöffnung 17 festgelegt. Im dargestellten Ausführungsbeispiel sind zwei Ausblasöffnungen 17 in einer Stirnseite 14 festgelegt. Das Ausführungsbeispiel gemäß Figuren 1, 2 und 5 ist auf dem Rücken 15 liegend dargestellt. Bei aufgestelltem Gehäuse 10 befinden sich die Ausblasöffnungen 17 also oben. Die Ausblasöffnungen 17 sind bevorzugt mit je einem Druckentlastungskörper 18, welcher beispielsweise eine Gitterstruktur aufweisen kann, zünddurchschlagsicher verschlossen.

Der Gehäuseinnenraum 12 kann ein Volumen von wenigstens mehreren Litern, beispielsweise wenigstens 100 Litern oder wenigstens 500 Liter oder sogar wenigstens 1000 Liter aufweisen. Prinzipiell ist dieses Gehäusekonzept jedoch auch für kleinere Gehäuse 10 anwendbar.

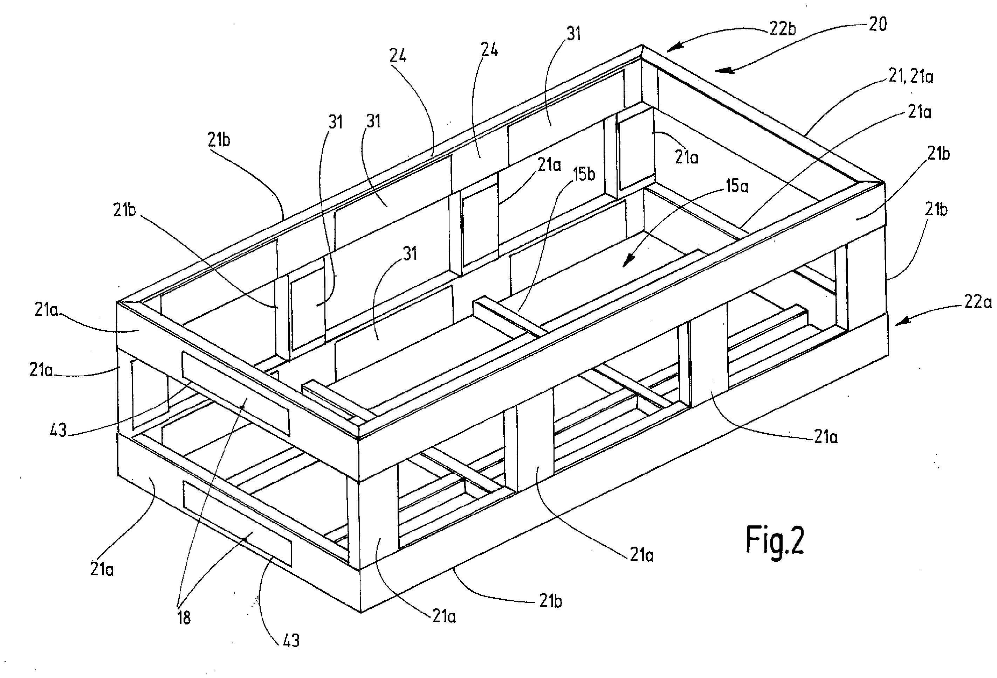

Wie beispielhaft aus Figuren 2 und 5 hervorgeht, weist das Gehäuse 10 bevorzugt einen skelettartigen Rahmen 20 auf, welcher ein Gerüst des Gehäuses 10 bildet. Der Rahmen 20 ist aus länglichen Tragelementen 21 zusammengesetzt.

Der Rahmen 20 kann mehrere Ebenen 22a,b, beispielsweise eine erste, z.B. untere, Ebene 22a und eine parallele zweite, z.B. obere, Ebene 22b, aufweisen, welche durch ebene Rahmenabschnitte 22a, 22b gebildet sind, welche aus Tragelementen 21 zusammengesetzt sind. Zwischenebenen sind möglich (nicht dargestellt). Wie im dargestellten Ausführungsbeispiel wird bevorzugt jede Seite des Rahmens 20 von, bevorzugt ebenen, Rahmenabschnitten gebildet, welche je eine Fläche umgrenzen. In anderen Ausführungsformen, wird wenigstens eine Seite von einem z.B. flächigen Rahmenelement gebildet. Z.B. kann der Boden des Rahmens von einem flächigen Rahmenelement gebildet sein. Alternativ oder zusätzlich können Tragelemente an zumindest einer Seite beispielsweise ein Kreuz ausbildend angeordnet sein (nicht gezeigt) .

Tragelemente 21 können insbesondere aus einem oder mehreren Profilen gebildet sein. Im dargestellten Ausführungsbeispiel werden Rechteckhohlprofile oder Vierkantrohre als Tragelemente verwendet.

Die Tragelemente können waagerechte Holme 21a und vertikale Stützen 21b bilden, die sich parallel entlang der Kanten des Gehäuses 10 erstrecken, wie die Figuren 2 und 5 veranschaulichen. Es ist zusätzlich oder alternativ grundsätzlich auch möglich einen Rahmen 20 mit diagonalen Tragelementen (Streben) vorzusehen (nicht dargestellt).

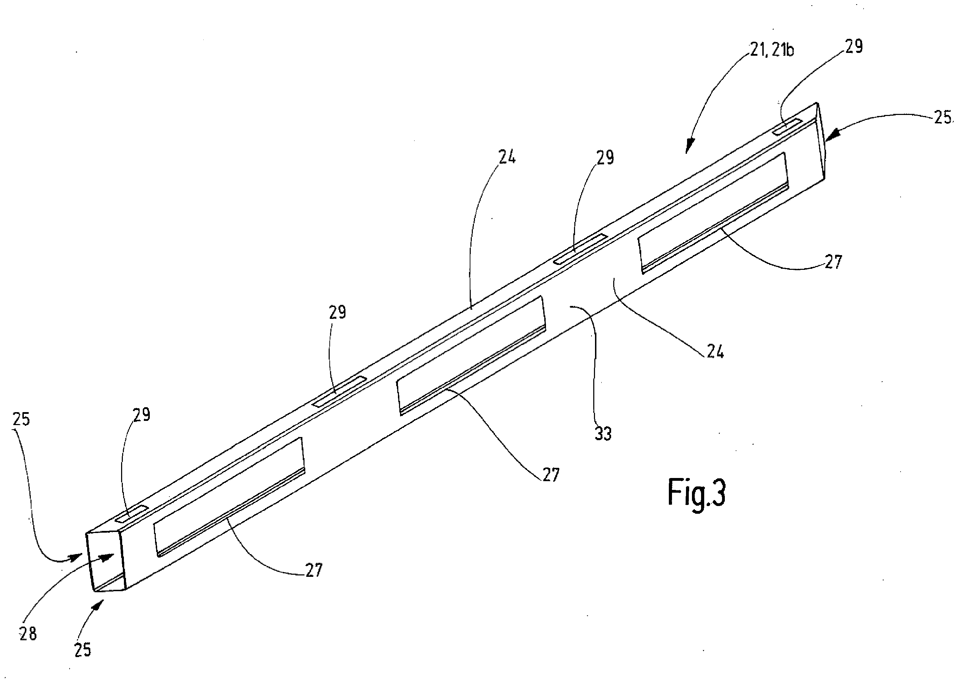

Figur 3 zeigt ein Ausführungsbeispiel eines Tragelements 21, hier beispielhaft eines Tragelements 21, welches in dem dargestellten Ausführungsbeispiel gemäß Figuren 1, 2 und 5 einen Stütze 21b bildet, der parallel zu einer Längsseite 13 des Gehäuses 10 angeordnet ist.

Die Tragelemente 21 weisen je ein im Querschnitt echt rechteckiges oder quadratisches Rohr auf. Die dargestellten Tragelemente weisen entsprechend vier Längsseiten 24 und zwei Stirnseiten 25 (Endseiten) auf. Anstelle des Rechteckrohrs als Grundkörper des Tragelements 21 können andere Rohre mit Polygonalquerschnitt, zum Beispiel Dreieckquerschnitt, Fünfeckquerschnitt, Sechseckquerschnitt usw., vorgesehen sein. Die Tragelemente 21, welche die Längsseiten 13 sowie die Stirnseiten 14 des Rahmens 20 bzw. des Gehäuses 10 bilden, begrenzen bevorzugt je einen Tragelementinnenraum 26. In dem Tragelement 21a gemäß Figur 3 sind längliche, beispielsweise rechteckige, Öffnungen 27 über die Länge des Tragelements 21a verteilt angeordnet. Über diese Öffnungen 27 ist ein Gasfluss vom Gehäuseinnenraum 12 in den Tragelementinnenraum 26 möglich. Das Tragelement 21 weist zudem stirnseitige Anschlussöffnungen 28 auf. Die stirnseitigen Anschlussöffnungen 28 dienen zum Verbinden des Tragelements 21 mit je einem weiteren Tragelement 21 derselben Ebene 22a, 22b. Über die stirnseitigen Anschlussöffnungen 26 ist das Tragelement 21a mit angrenzenden Tragelementen 21b nach Art einer Gehrung verbunden, z.B. verklebt oder schweißt. Selbstverständlich können die Anschlussöffnungen 26 auch so angeordnet sein, dass zwei quer zueinander orientierte Tragelemente 21a einer Ebene 22a, 22b des Rahmens stumpf aneinanderstoßen. In einer solchen Ausführungsform, die nicht dargestellt ist, weist ein Tragelement eine stirnseitige Anschlussöffnung auf und stößt damit an eine Längsseite 24 eines weiteren Tragelements, wo dieses eine entsprechende Anschlussöffnung aufweist. Dessen stirnseitige Öffnung sollte aber zünddurchschlagsicher verschlossen sein. Insgesamt wird daher eine Gehrungsverbindung bevorzugt, da bei dieser ein zünddurchschlagsicherer Verschluss der stirnseitigen Öffnung entfallen kann. Denn beim Herstellen der Verbindung zwischen den Tragelementen 21a über Eck wird bevorzugt eine zünddurchschlagsichere Verbindung erhalten. Tragelemente 21a für die Stirnseiten des Gehäuses 10 bzw. Rahmens 20 können ebenfalls mehrere oder wie dargestellt (Figuren 2 und 5) eine Öffnung 27 für den Fluidaustausch zwischen Gehäuseinnenraum 12 und Tragelementinnenraum 26 aufweisen.

Das in Figur 3 dargestellte Tragelement 21a weist zudem längsseitige Anschlussöffnungen 29 auf, welche aufgrund der Orientierung im dargestellten Ausführungsbeispiel ober- bzw. unterseitige Anschlussöffnungen sind. Die längsseitigen oder oberseitigen bzw. unterseitigen Anschlussöffnungen 29 dienen dem Verbinden des Tragelements 21a mit einem weiteren, vertikal orientierten Tragelementen 21b, um eine fluidische Verbindung zwischen dem Tragelementinnenraum 26 und dem weiteren Tragelement 21b herzustellen. Im dargestellten Ausführungsbeispiel weisen die stirnseitigen Tragelemente 21a keine längsseitigen Anschlussöffnungen zur Verbindung mit vertikalen Tragelementen 21b auf, obwohl dies auch möglich ist.

Im dargestellten Ausführungsbeispiel weisen vertikal orientierte Tragelemente 21b zum Verbinden der beiden Ebenen 22a, 22b stirnseitige Anschlussöffnungen 28 auf, welche zur Verbindung der Tragelementinnenräume 26 an den längsseitigen Anschlussöffnungen 29 des längsseitigen Tragelement 21a angeordnet sind.

Die Tragelemente 21, die derart verbunden sind, dass ihre Tragelementinnenräume 26 prinzipiell Gas austauschen können - ggf. erst nach dem Zerstören beispielsweise eines Berstkörpers -, bilden insgesamt ein Zwischenvolumen 30. Zu den Aufnahmetragelementen 21 zählen folglich solche, deren Tragelementinnenräume 26 zu einem Zwischenvolumen 30 verbunden sind. Das Zwischenvolumen 30 ist ein unverzweigter oder ein- oder mehrfach verzweigter Strömungskanal, welcher aus dem Gehäuseinnenraum 12 durch die Öffnungen 27 in den Tragelementen und die Ausblasöffnungen 17 ins Freie führt.

Der Rahmen 20 oder das Gehäuse 10 können weitere Tragelemente 21 aufweisen, welche zwar einen Tragelementinnenraum 26 begrenzen können, aber nicht an dem Zwischenvolumen 30 teilnehmen bzw. keinen Teil des Zwischenvolumens 30 bilden müssen. Solche sind in dem dargestellten Ausführungsbeispiel gemäß Figur 2 beispielsweise bodenseitig angeordnet.

Zur Bildung des Zwischenvolumens 30 ist die Verbindungsstelle zwischen den Tragelementen 21 vorzugsweise zünddurchschlagsicher. Die Tragelemente 21 können miteinander beispielsweise verklebt und/oder verschweißt sein, wobei die Klebe- und/oder Schweißnaht vorzugsweise zünddurchschlagsicher ist.

Die Öffnungen 27 in den Tragelementen 21 zum Gehäuseinnenraum 12 sind vorzugsweise mit Druckentlastungskörpern 31 verschlossen wie aus den Figuren 2, 4 und 5 beispielhaft hervorgeht. Dies bedeutet, dass zumindest ein Großteil des Gases beim Durchtreten durch die Öffnung 27 durch den Druckentlastungskörper 31 treten muss. Die Druckentlastungskörper 31 für die Öffnungen 27 zum Gehäuseinnenraum 12 können gleich oder unterschiedlich zu den Druckentlastungskörpern 18 für die Ausblasöffnungen 17 sein. Die Druckentlastungskörper 31 können zünddurchschlagsicher sein. Das Gas aus dem Gehäuseinnenraum 12 ist nach dem Passieren des Druckentlastungskörpers 31 in das Zwischenvolumen 30 derart abgekühlt, dass es bereits Atmosphäre in dem Zwischenvolumen 30 nicht mehr entzünden kann. Die Aufnahmetragelemente 21 weisen folglich bevorzugt einen zünddurchschlagsicheren Mantel auf, mit welchem das Aufnahmetragelement 21 den Tragelementinnenraum 26 quer zur Längserstreckungsrichtung L des Tragelements 21 oder radial begrenzt, wobei der Mantel durch eine Wand 33 des Tragelements und/oder zumindest abschnittsweise durch einen zünddurchschlagsicheren Druckentlastungskörper 31 gebildet sein kann.

Ein Druckentlastungskörper 31 für eine Öffnung 27 zum Gehäuseinnenraum 12 und/oder ein Druckentlastungskörper 18 für eine Ausblasöffnung 17 kann beispielsweise aus gesinterten Metallkugeln, Metallpulvern, einer oder mehreren übereinander liegenden Drahtgewebe- oder Gelegelagen oder dergleichen bestehen.

Ein Druckentlastungskörper 18, 31 weist bevorzugt offene Poren auf, deren Weite so gering und deren Länge so groß ist, dass Flammen aus dem Gehäuseinnenraum 12 nicht in das Zwischenvolumen 30 des Rahmens 20 bzw. nicht aus dem Zwischenvolumen 30 des Rahmens 20 in die Umgebung gelangen können. Auch können auf diesem Weg keine glühenden Partikel in das Zwischenvolumen 30 gelangen.

Ein Druckentlastungskörper 18, 31 kann aus metallischem oder aus nicht metallischem Material ausgebildet sein. Das betreffende Material, wie Metall, Keramik, Glas oder dergleichen, kann in Form von Partikeln, Kugeln, Fäden oder Schaum durch Sintern, Kleben oder mechanisches Verbinden zu einem stabilen Körper geformt sein. Druckentlastungskörper 18, 30 können insbesondere als ebene Platten ausgebildet sein. Die Druckentlastungskörper 18, 30 bilden bevorzugt Flammenschutzfilter, welche Gasdurchtrittsöffnungen in Form von Poren aufweisen, die so eng und so lang sind, dass Flammen und glühende Partikel nicht hindurch gelangen können.

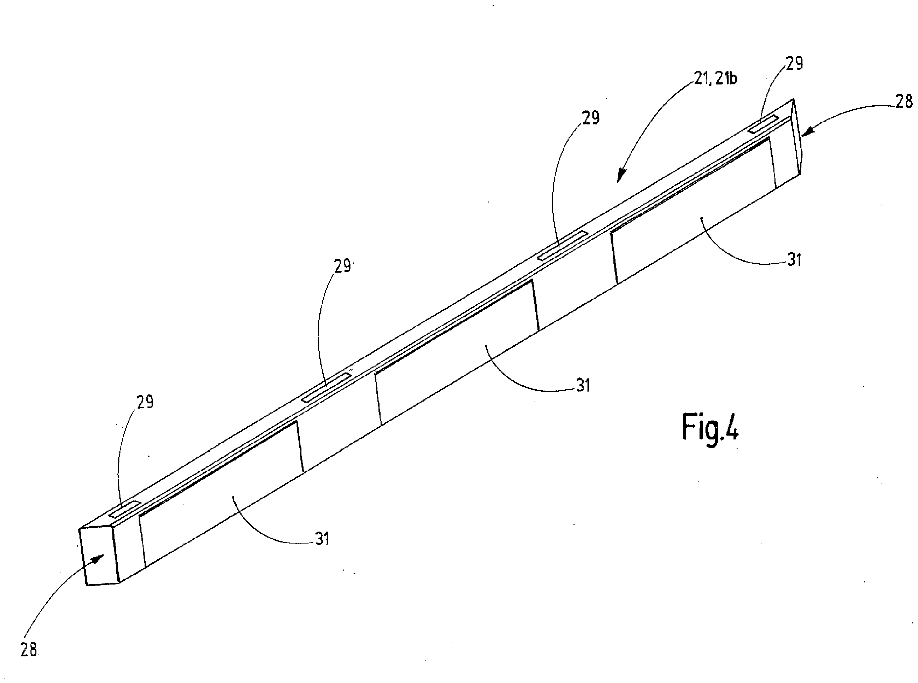

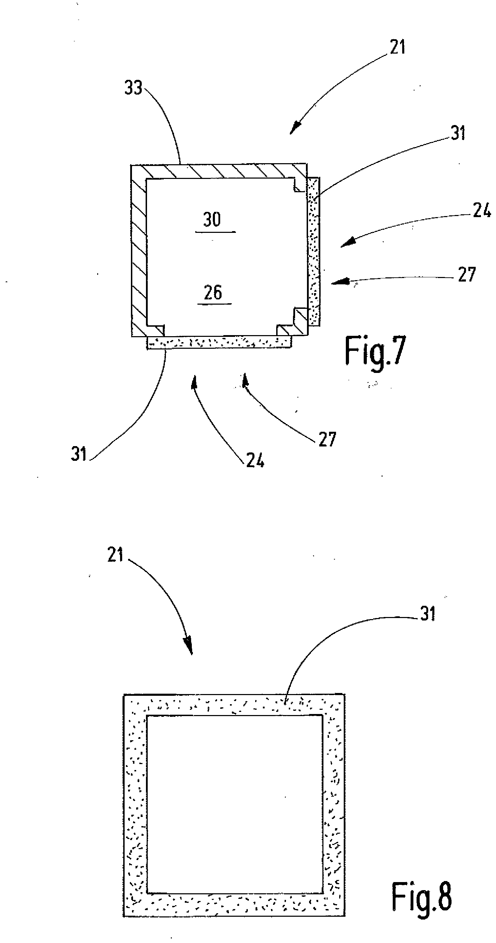

In dem Ausführungsbeispiel gemäß Figur 3 und 4 sind Öffnungen 27 zum Gehäuseinnenraum 12 nur an einer Längsseite 24 angeordnet. Wie die Querschnittsdarstellung eines Ausführungsbeispiels eines weiteren länglichen Tragelements 21 nach Figur 7 eines Beispiels eines Rahmens zeigt, können Ausführungsformen von Tragelementen 21 an zumindest zwei, oder insbesondere im Falle von vertikalen Tragelemente 21b beispielsweise drei, zueinander winklig angeordneten Längsseiten 24, welche an den Gehäuseinnenraum 12 angrenzen, Öffnungen 27 zum Gasaustausch zwischen dem Gehäuseinnenraum 12 und dem Zwischenvolumen 30 bzw. der Umgebung 11 des Gehäuses 10 aufweisen. Diese Öffnungen 27 können mit Druckentlastungskörpern 31 geschlossen, vorzugsweise zünddurchschlagsicher geschlossen sein.

Ausführungsformen des Rahmens können wenigstens ein Tragelement 21 aufweisen, bei dem ein Körper des Tragelements 21 selbst einen gerüst- oder skelettartigen Rahmen als Träger für Druckentlastungskörper 31, insbesondere plattenförmige Druckentlastungskörper 31, bildet.

Ausführungsformen des Rahmens 20 können wenigstens ein Tragelement 21 aufweisen, welches ein profil- oder rohrförmiger offenporiger Druckentlastungskörper 31 ist. Ein entsprechendes Ausführungsbeispiel ist in Figur 8 im Querschnitt dargestellt. Der Druckentlastungskörper 31 kann beispielsweise aus offenporigen Platten zusammengesetzt sein, die beispielsweise miteinander verschweißt oder verklebt sein können.

Andere Ausführungsbeispiele von Tragelementen (nicht dargestellt) bilden alleine, ggf. mit einem oder mehreren Druckentlastungskörpern, keinen Mantel, insbesondere zünddurchschlagsicheren Mantel. Vielmehr werden seitliche Öffnungen der Tragelemente erst beim Verbinden mit Flächenelementen geschlossen, so dass die Tragelemente mit den Flächenelementen einen Tragelementinnenraum begrenzen.

Es können Tragelemente 21 vorhanden sein, welche zwar mit ihrem Tragelementinnenraum 26 zum Zwischenvolumen 30 beitragen, aber keine direkten Öffnungen 27 zum Gehäuseinnenraum 12 aufweisen. Solche sind in dem Ausführungsbeispiel gemäß Figur 2 beispielsweise in der unteren Ebene 22a an den Stirnseiten 14 angeordnet. Diese können aber, wie auch die in der oberen Ebene 22b angeordneten stirnseitigen Tragelemente 21 des Ausführungsbeispiels, Ausnehmungen 36 aufweisen, um Ausblasöffnungen 17 des Gehäuses 10 festzulegen.

Der Rahmen 20 bildet ein Gerüst für das Gehäuse 10. Flächenelemente 37 bis 40 können die äußere Beplankung des Rahmens bilden. Die Flächenelemente 37 bis 40 für die Längsseiten 13, Stirnseiten 14, Boden 15 und Decken 16 können an dem Rahmen 20 befestigt sein. Es sind grundsätzlich auch Ausführungsbeispiele möglich, in denen die Flächenelemente 37 bis 40 in dem Rahmen 20 angeordnet und an dem Rahmen 20 befestigt sind. Der Rahmen bildet dann ein äußeres Skelett (nicht dargestellt).

Das Gehäuse gemäß Figur 1 ist mit plattenförmigen Flächenelementen 37 bis 40 geschlossen, welche an dem Rahmen 20 befestigt sein können. Die Figuren 1 und 5 zeigen den beispielhaften Rahmen 20 gemäß Figur 2 mit einer Beplankung aus Platten 37, 38, welche das Gehäuse längsseitig und stirnseitig schließen. Eine weitere Platte 39 schließt das Gehäuse 10 bodenseitig. Insbesondere die Platten 37, 38, welche das Gehäuse längs- und stirnseitig schließen, können an dem Rahmen 20 befestigt sein. Die Platten 37, 38 können insbesondere punktuell oder linienförmig mit den Tragelementen 21 verbunden sein, beispielsweise mittels punkt- oder linienförmigen Schweißnähten oder -stellen 41. In dem dargestellten Ausführungsbeispiel sind die Platten 37, 38 für die Längsseiten 13 und Stirnseiten 14 gemäß Figuren 1 und 5 mittels Punktschweißungen 41 mit den Tragelementen 21 verbunden.

Platten, insbesondere die Platten 37 bis 39 für die Längsseiten 13 und Stirnseiten 14 und den Boden 15 können untereinander verbunden sein, beispielsweise miteinander verschweißt und/oder verklebt. Die Platten 37 bis 39 können beispielsweise miteinander verbunden sein, so dass zwischen den Platten 37 bis 39 ein zünddurchschlagsicherer Spalt oder eine Dichtnaht 42 ausgebildet ist, um eine Explosion auf den Innenraum des Gehäuses zu begrenzen. Die Platten 37 bis 39 müssen mit dem Rahmen bzw. mit den Tragelementen 21 nicht unbedingt einen zünddurchschlagsicheren Spalt festlegen, können dies aber in Ausführungsformen, wobei dann ggf. auf explosionssichere Dichtnähte 41 verzichtet werden kann.

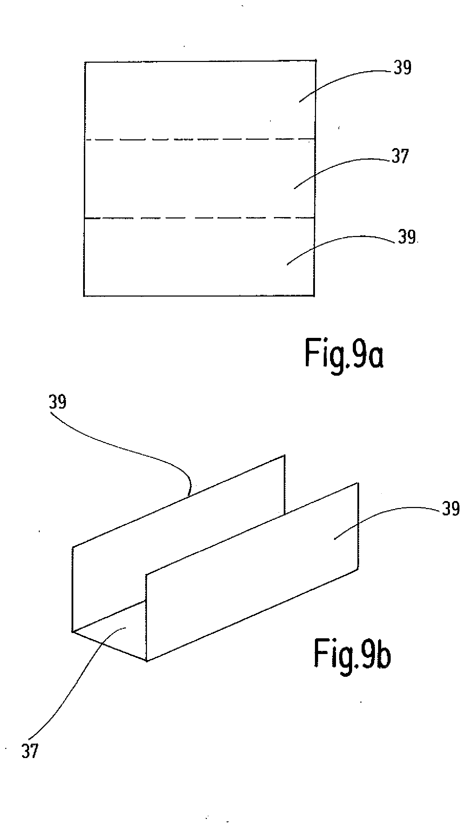

Aneinander angrenzende Platten 37 bis 39 können nahtlos einstückig miteinander verbunden sein. Eine Möglichkeit zur Herstellung des Gehäuses 10 ist beispielsweise in Figuren 9a, 9b gezeigt. Dort wird ein blechförmiges Grundmaterial entlang der gestrichelt dargestellten Linien umgebogen, um drei aneinandergrenzende Platten 37, 39 und damit ein Teil des Mantels des Gehäuses 10 zu bilden. Das Ausbilden von länglichen Schweißnähten, welche dicht sein müssen, entfällt entlang der gestrichelten Linie. Selbstverständlich kann ein Blechmaterial in Ausführungsbeispielen auch nur entlang einer Linie umgebogen sein, um Flächenelemente zum Schließen von quer zueinander ausgebildeten Seiten des Gehäuses 10 zu bilden.

Bevorzugt sind der Rahmen 20 und die Flächenelemente 37 bis 40, bevorzugt zumindest die Flächenelemente 37, 38 für die Stirnseiten 14 und Längsseiten 13 des Gehäuses 10, aus gleichem Material. Beispielsweise können sowohl der Rahmen 30, als auch die Flächenelemente 37 bis 40 aus Aluminium, Stahl oder Kunststoff oder Verbundmaterial sein. Wenn Rahmen 30 und Flächenelemente 37 bis 40 aus gleichem Material bestehen, ist der thermische Ausdehnungskoeffizient vergleichbar, was Spannungen vermeidet.

Um wenigstens eine Ausblasöffnungen 17 festzulegen, können ein oder mehrere Flächenelemente 37 bis 40 wenigstens eine Ausnehmung 43 aufweisen.

Die Druckentlastungskörper, mittels welchen die Ausblasöffnungen 17 verschlossen sein können, können, wie dargestellt, im Tragelementinnenraum 26 angeordnet sein. Alternativ kann der Druckentlastungskörper 18 außen an dem Flächenelement 38 befestigt sein, um die Ausblasöffnung 17 zünddurchschlagsicher zu schließen.

In einem oder mehreren der Flächenelemente 37 bis 40 können elektrische Durchführungen zur Kontaktierung der Komponenten im Innenraum 12 des Gehäuses 10 oder mechanische Durchführungen zur Übertragung einer Bewegung angeordnet sein. Diese Durchführungen (nicht dargestellt) sind zünddurchschlaggesichert, um zu verhindern, dass an einer Stelle des Flächenelement 37-40, in welchem eine Durchführung angeordnet ist, eine Explosion im Inneren des Gehäuses in die Umgebung durchzündet.

Es ist möglich, dass die Verbindung zwischen dem Gehäuseinnenraum 12 und der Umgebung 11 des Gehäuses 10 durch das Zwischenvolumen 30 zünddurchschlagsicher gemacht ist, indem die Öffnungen 27 in den Tragelementen 21 zur Verbindung der Tragelementinnenräume 26 mit dem Gehäuseinnenraum 12 zünddurchschlagsicher verschlossen sind. Alternativ oder zusätzlich kann die wenigstens eine Ausblasöffnung 17, welche eine Verbindung zwischen dem Zwischenvolumen 30 und der Umgebung 11 des Gehäuses 10 herstellt, zünddurchschlagsicher verschlossen sein.

In dem dargestellten Ausführungsbeispiel sind sowohl die Öffnungen 27 in den Tragelementen 21 zünddurchschlagsicher verschlossen, als auch die Ausblasöffnungen 17 zünddurchschlagsicher verschlossen. Wenn Gas in dem Zwischenvolumen 30 zündet, z.B. weil Wände der Tragelemente 21 die Zündtemperatur erreichen, kann das Gas auf Grund des zünddurchschlagsicheren Verschlusses der Ausblasöffnung 17 die Ausblasöffnung 17 allenfalls so abgekühlt verlassen, dass dieses die Atmosphäre außerhalb des Gehäuses 10 nicht entzünden kann. Bei Verzicht auf den zünddurchschlagsicheren Verschluss der Ausblasöffnung 17 ist beispielsweise dafür Sorge zu tragen, dass Gas in dem Zwischenvolumen 30 nicht entzündet werden kann.

Alternativ oder zusätzlich zum Bilden einen zünddurchschlagsicheren Mantels der Tragelemente 21 mit den zünddurchschlagsicheren Druckentlastungskörpern 31, welcher den Tragelementinnenraum 26 quer zur Längserstreckungsrichtung L des Tragelements 21 begrenzt, kann die Verbindung zwischen Gehäuseinnenraum 12 und dem Zwischenvolumen 30 nicht zünddurchschlagsicher sein. Lediglich die eine oder mehreren Ausblasöffnungen 17 sind zünddurchschlagsicher verschlossen.

In wieder anderen Ausführungsformen sind keine Ausblasöffnungen 17 vorhanden. Die Innenraumöffnungen 27 in den Aufnahmetragelementen 21 können dann teilweise mit Druckentlastungskörpern 31 verschlossen sein, die zünddurchschlagsicher sein können, in Ausführungsformen aber nicht zünddurchschlag sicher sein müssen. Durch den zumindest teilweisen oder vollflächigen Verschluss der Innenraumöffnung 27 mit einem Druckentlastungskörper 31 wird sichergestellt, dass das Gas im Zuge des Durchtritts durch die Innenraumöffnung 27 in das Zwischenvolumen 30 abkühlt, wobei zur Abkühlung Wärmeaufnahme durch den Druckentlastungskörper 31 und ggf. Expansion beim Eintritt aus dem Druckentlastungskörper 18 in das Zwischenvolumen 30 beitragen kann. Beispielsweise kann der Joule-Thomson-Effekt wirksam werden.

Das Zwischenvolumen 30 bzw. der Kanal und/oder jeder Tragelementinnenraum 26 weist vorzugsweise ein größeres Oberflächen zu Volumen-Verhältnis auf, als der Innenraum 12 des Gehäuses 10, so dass eindringende Gase aus dem Innenraum 12 besser gekühlt werden als im Innenraum 12 des Gehäuses 10.

Für einen zünddurchschlagsicheren Verschluss der Ausblasöffnung 17, wie in Figur 5 dargestellt, muss, auf Grund des in dem dargestellten Ausführungsbeispiel in dem Tragelement 21 angeordneten Druckentlastungskörpers 18, die stirnseitige Platte 38 um die Ausblasöffnung 17 herum mit den stirnseitigen Tragelementen 21a, 21b derart verbunden sein, dass ein Austreten von Gasen, welche derart heiß sind, dass diese die Atmosphäre außerhalb des Gehäuses 10 zünden können, vermieden ist. Dies ist beispielsweise durch Ausbilden eines zünddurchschlagsicheren Spalts zwischen der Platte 38 und dem Tragelement 21a, 21b oder durch eine Dichtnaht möglich, welche die Platte 38 mit den stirnseitigen Tragelementen 21a, 21b verbindet.

Bevorzugt sind mögliche Austrittswege von dem Gehäuseinnenraum 12 in die Umgebung 11 auf solche beschränkt, welche durch das Zwischenvolumen 30 führen. Bevorzugt sind insbesondere die Flächenelemente 37, 38, 39, 40 frei von solchen Öffnungen, die eine Gasverbindung zwischen dem Innenraum 12 des Gehäuses 10 und der Umgebung 11 herstellen, ohne, dass das Gas einen Weg durch ein Zwischenvolumen 30 gebildet durch die Aufnahmetragelemente 21 des Rahmens 20 nehmen muss.

Vorteil des Dazwischenschaltens eines Zwischenvolumens zwischen Innenraum 12 des Gehäuses 10 und Umgebung 11 ist, dass das Gas bei einer Explosion an einer Vielzahl an Stellen innerhalb des Gehäuseinnenraums 12 in das Zwischenvolumen 30 eintreten und die eigentliche Verbindung in die Umgebung 11 an einer zentralen Stelle angeordnet sein kann. In Ausführungsformen muss nur der Verschluss der Ausblasöffnung 17 oder der Ausblasöffnungen 17 Zünddurchschlagsicher sein und darf eine maximale Oberflächentemperatur nicht überschreiten, um ein Entzünden von Atmosphäre an dem Verschluss zu vermeiden. Zudem bildet das Zwischenvolumen 30 einen Schluckraum für eine aus dem Innenraum 12 des Gehäuses 10 kommende Druckwelle. Ein Teil der kinetischen Energie und Wärmeenergie, welche durch die Explosion frei wird, kann durch die Vielzahl an Druckentlastungskörpern beim Durchtritt des Gases durch die Druckentlastungskörper in das Zwischenvolumen 30 aufgenommen werden.

Wie aus Figur 5 beispielhaft hervorgeht, kann das Gehäuse 10 einen rahmenförmigen Flansch 45 zur Befestigung des Deckels 16 aufweisen. Der Flansch 45 ist mit den längsseitigen Platten 37 und den stirnseitigen Platten 38 vorzugsweise verschweißt und/oder verklebt, so dass die Schweißnaht und/oder Klebenaht zünddurchschlagsicher ist. Alternativ oder zusätzlich zum Ausbilden einer Dichtnaht zwischen Flansch 45 einerseits und längs- und stirnseitigen Flächenelementen 37, 38 andererseits kann zwischen dem Flansch 45 einerseits und den längsseitigen und den stirnseitigen Platten 37, 38 andererseits ein zünddurchschlagsicherer Spalt festgelegt sein.

Auf die Festlegung von zünddurchschlagsicheren Spalten zwischen den Tragelementen 21 und den Flächenelementen 37, 38 kann verzichtet werden. Andernfalls könnte es ausreichen, auch zwischen dem Flansch 45 und den Tragelementen 21 der oberen Ebene 22b einen zünddurchschlagsicherer Spalt, insbesondere Flachspalt, festzulegen, um das Gehäuse an dieser Stelle zünddurchschlagsicher auszubilden.

Der Flansch 45 kann Gewindebohrungen 46 oder andere Vorrichtungen aufweisen, um den Deckel 16 mit dem Flansch 45 zu verbinden. Die Gewindebohrungen 46 können mit den Befestigungsbolzen zur Befestigung des Deckels 16 zünddurchschlagsichere Spalte bilden. Zwischen Flansch 45 und Deckel 16 kann ein zünddurchschlagsicherer Spalt, insbesondere Flachspalt, festgelegt sein.

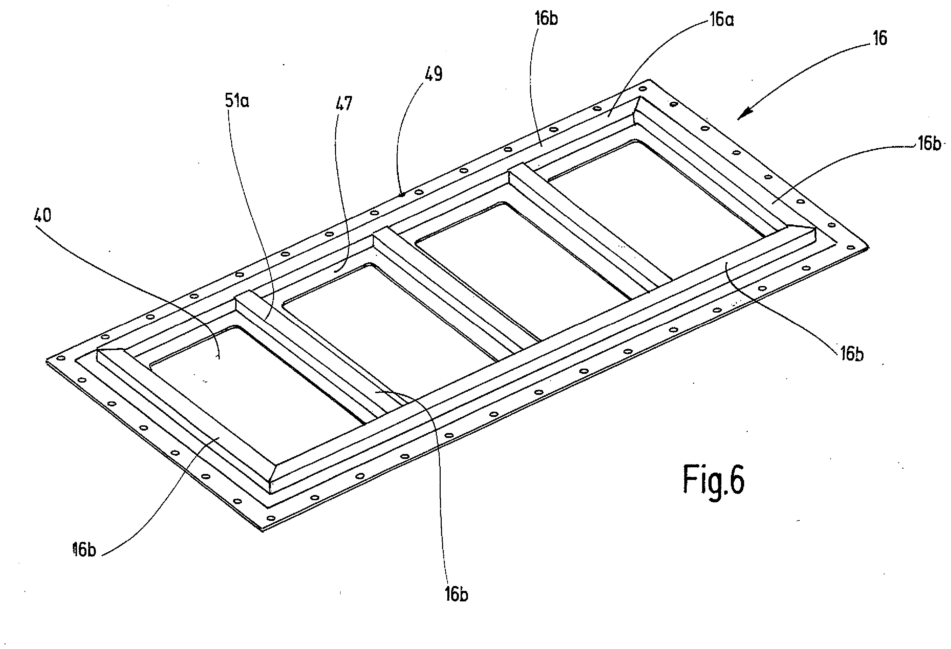

Ein Deckel 16, wie er für das beispielhafte erfindungsgemäße Gehäuse 10 verwendet werden kann, geht aus Figur 6 beispielhaft hervor. Der Deckel 16 weist ein plattenförmiges Flächenelement 40 auf. Der Deckel 16 kann eine stabilisierende Zwischenplatte 47 aufweisen, welche Aussparungen aufweisen kann. Der Deckel 46 kann jedoch auch ohne Zwischenplatte 47 auskommen. Die Deckelplatte 40 weist einen Randbereich 49 auf, in welchem Öffnungen für Befestigungsbolzen, welche mit den Gewindebohrungen 46 des Flanschs zusammenarbeiten angeordnet sind. Der Randbereich 49 ist dazu eingerichtet mit dem Flansch 45 einen zünddurchschlagsicheren Spalt zu bilden, insbesondere einen Flachspalt.

Auf der Innenseite des Deckels 16 kann ein Stützrahmen 16a angeordnet sein. Die Stützrahmenelemente 16b des Stützrahmens tragen jedoch nicht zu dem Zwischenvolumen 30 bei. Dasselbe gilt in dem dargestellten Ausführungsbespiel für die Stützrahmenelemente 15b des Stützrahmens 15a des Bodens 15. In anderen Ausführungsformen können die Stützrahmenelemente 15b des Bodens 15 ebenfalls Tragelemente 21 des Rahmens 20 sein und an dem Zwischenvolumen 30 teilnehmen. Dies bedeutet, dass die Tragelementeinnenräume 26 der Stützrahmenelemente 15b mit den stirnseitigen und längsseitigen Tragelementen 21 der unteren Ebene 22a fluidisch verbunden sind.

In Gebrauch ist der Deckel 16 fest mit dem in Figur 5 dargestellten restlichen Gehäusekörper verbunden, wobei entsprechende Verbindungsmittel, wie Klemmen, Schrauben (wie im dargestellten Ausführungsbeispiel) oder dergleichen dazu verwendet sind. In dem Gehäuseinnenraum 12 befinden sich Komponenten, die Zündquellen bilden können, wie beispielsweise Relais, Transistoren, Widerstände oder dergleichen Elemente, die sich in Betrieb erwärmen können. Befindet sich das Gehäuse 10 in einer explosionsfähigen Atmosphäre, können brennbare oder explosionsfähige Gase in den Gehäuseinnenraum 12 gelangen. Werden sie dort gezündet, führt die eintretende Verpuffung zu einer Expansion der beteiligten Gase. Das Zwischenvolumen, gebildet durch die Tragelementinnenräume ist vorzugsweise frei von elektrischen oder elektronischen Komponenten, welche Zündquellen bilden können. Wenn in dem Zwischenvolumen überhaupt Komponenten angeordnet sind, sind diese vorzugsweise eigensicher ausgebildet.

Diese strömen sich dabei abkühlend durch die Öffnungen 27 in den Tragelementen 21 in das Zwischenvolumen 30 und von dort über die Ausblasöffnungen 17 ins Freie. In Folge der Explosion können ggf. vorhandene Berstscheiben zerstört werden. Jedenfalls ist spätestens dann die fluidische Verbindung zwischen dem Gehäuseinnenraum 12 und dem Tragelementinnenraum 26 offen. Nun kann Gas aus dem Gehäuseinnenraum 12 in den Tragelementinnenraum 26 strömen.

Beim Eintritt in die Trägerelementinnenräume 26 kühlt das Gas ab. Wenn die Öffnungen 27 in die Trägerelementinnenräume 26 mit offenporigen Druckentlastungskörpern 31 verschlossen sind, führt dies umso mehr zur Abkühlung, insbesondere durch Wärmeübertragung auf den Druckentlastungskörper 31. In Ausführungsformen des Gehäuses 10 können die Druckentlastungskörper 31, welche die Öffnungen 27 verschließen (bedecken), selbst nicht zünddurchschlagsicher sein, aber immerhin, z.B. durch Aufnahme von Wärmeenergie, zu einer gewissen Abkühlung des Gases fühlen, wenn dieses durch die Öffnungen 27 in das Zwischenvolumen 30 tritt.

Wenn der Druckentlastungkörper 31 die Öffnung 27 zünddurchschlagsicher verschließt, werden die Gase oder Partikel beim Durchtritt durch den Druckentlastungskörper 31 soweit gekühlt, dass die in das Zwischenvolumen 30, welches ein Kanal, ggf. einen mehrfachverzweigter Kanal ist, gelangenden Gase keine Zündquelle für explosionsfähiges Gas in dem Zwischenvolumen 30 bzw. in der Umgebung 11 des Gehäuses 10 mehr darstellen.

Wenn der Druckentlastungskörper 18 die Ausblasöffnung 17 zünddurchschlagsicher verschließt, werden die Gase beim Durchtritt durch den Druckentlastungskörper 18 soweit gekühlt, dass aus dem Zwischenvolumen 30 bzw. dem Gehäuseinnenraum 12 durch die Ausblasöffnung 17 gelangenden Gase oder Partikel keine Zündquelle für explosionsfähiges Gas in der Umgebung des Gehäuses mehr darstellt.

Der Überdruck aufgrund der Explosion wird folglich dadurch abgebaut, dass das Gas bei einer Explosion aus dem Innenraum 12 des Gehäuses durch die ein oder mehreren Öffnungen 27 in den Tragelementen 21 in das Zwischenvolumen 30 eintreten kann, wodurch es bereits eine erste Abkühlung erfahren kann. Die Druckwelle kann folglich teilweise von dem Zwischenvolumen geschluckt werden. Ein Überdruck in dem Zwischenvolumen 30 wird über die Ausblasöffnungen 17 abgebaut, sofern solche vorhanden sind.

Sind die Öffnungen 31 in den Tragelementen 21 nicht zünddurchschlagsicher verschlossen oder ist das Gas in dem Zwischenvolumen 30 aus anderem Grund explosionsgefährdet, z.B. weil die innere Oberfläche der Tragelemente 21 potentiell so heiß werden kann, das Gas sich darin entzündet, ist vorzugsweise die wenigstens eine Ausblasöffnung 17 zünddurchschlagsicher verschlossen.

Bevorzugt ist zumindest ein Teil des Querschnitts des Kanals 30 gebildet durch die untereinander verbundenen Tragelementinnenräume 26 frei von porösem Material, um dem Gas innerhalb des Kanals 30 einen geringen Widerstand entgegenzusetzen. Bei einer Explosion, z.B. in einer Ecke des großvolumigen Gehäuses 10, kann somit z.B. nicht gezündetes Gas, z.B. aus einer gegenüberliegenden Ecke, damit mit insgesamt geringem Widerstand durch die Öffnungen 27 von dem Innenraum 12 des Gehäuses 10, den Kanal 30 und aus den Ausblasöffnungen 17 heraus ausgestoßen werden.

Erfindungsgemäße Baukastensysteme eignen sich zur Herstellung von insbesondere großen Gehäusen 10 mit einem Gehäuseinnenraum 12 mit einem Volumen von größer oder gleich 100, größer oder gleich 500 oder sogar größer oder gleich 1000 Litern, auch wenn erfindungsgemäße Baukastensysteme auch für kleinere Volumina verwendbar sind.

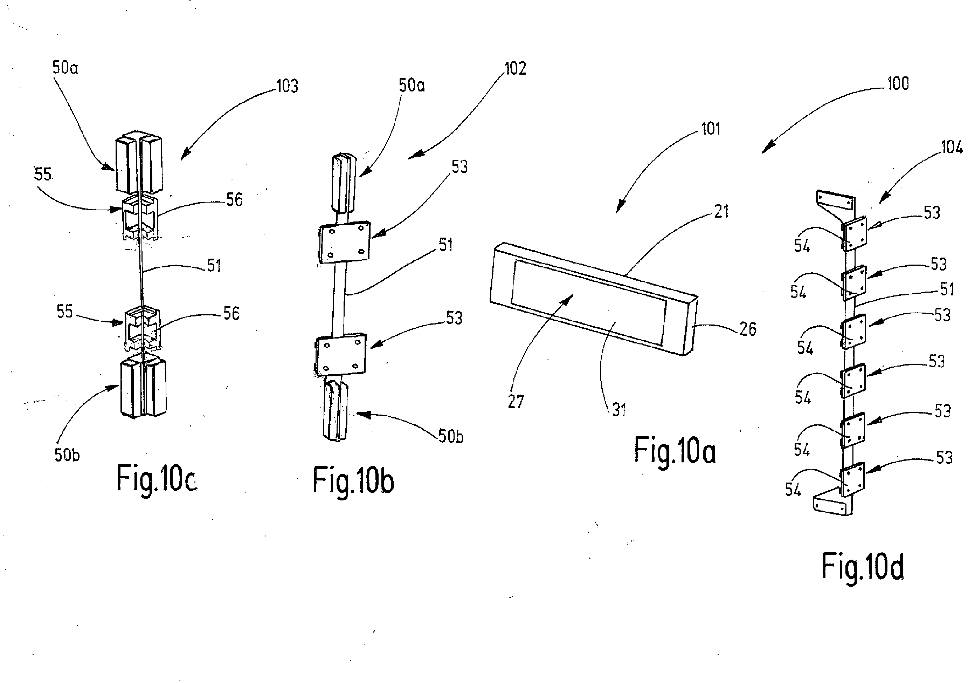

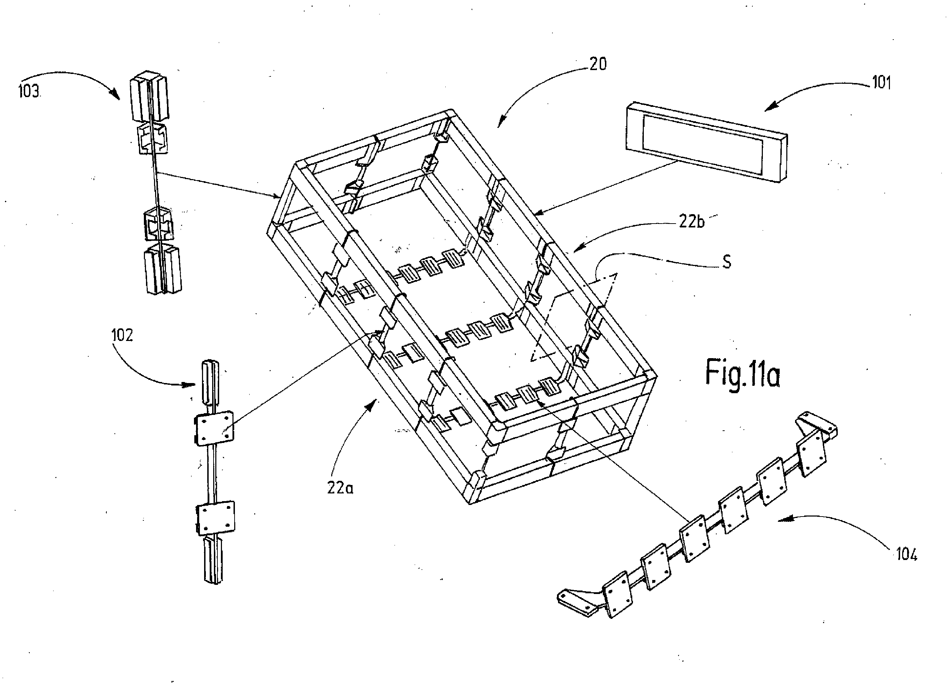

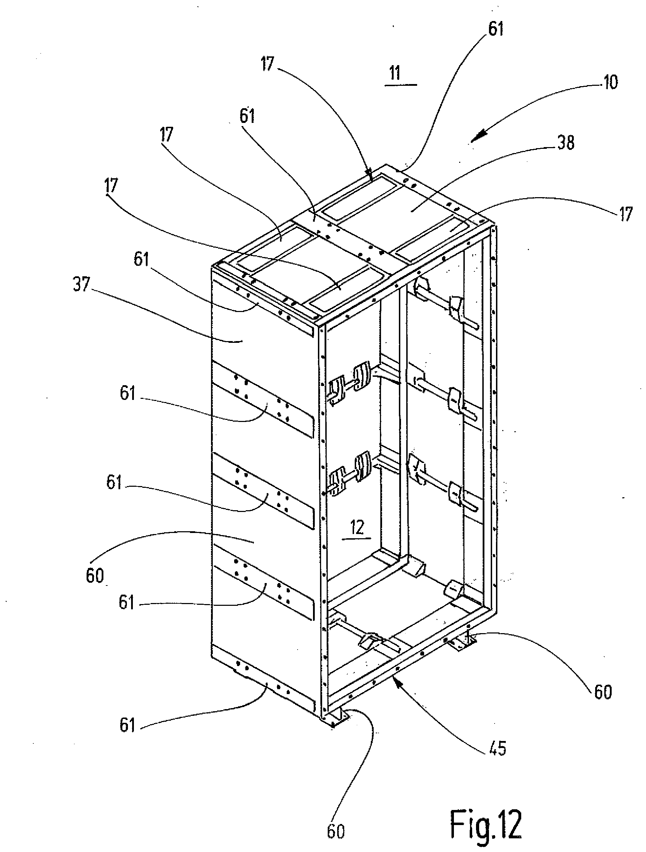

Figur 10 zeigt Baukastenmodule eines Ausführungsbeispiels eines Baukastensystems 100 zur Herstellung von Rahmen 20 unterschiedlicher Größe. Figur 11a zeigt ein Beispiel eines Rahmens 20 aufgebaut aus den Modulen des Baukastensystems 100 und Figur 12 ein Beispiel eines Gehäuses 10 aufgebaut mittels des Rahmens 20 gemäß Figur 11a. Mögliche Unterschiede zu den Ausführungsbeispielen gemäß Figuren 1 bis 9 - zusätzlich zu dem wesentlichen Unterschied ist, dass die Figuren 10 bis 12 ein Baukastensystem 100 bzw. daraus oder damit aufgebaute Rahmen 20 und Gehäuse 10 betreffen - ergeben sich aus nachfolgender Beschreibung. Ansonsten kann die Beschreibung zu den Ausführungsbeispielen gemäß Figuren 1 bis 9 für die Beschreibung von Einzelheiten möglicher Ausführungsbeispiele des Baukastensystems 100 bzw. daraus aufgebauter Rahmen 20 oder Gehäuse 10 herangezogen werden.

Ein erstes Modul 101 des Baukastensystems 100 ist ein Aufnahmetragelement 21, welches einen Tragelementinnenraum 26 und eine Öffnung begrenzt. Diese Öffnung kann in Exemplaren des ersten Moduls 101 als Innenraumöffnung 27 der fluidischen Verbindung des Gehäuseinnenraums 12 mit dem Tragelementinnenraum 26 dienen. Die Öffnung ist vorzugsweise zünddurchschlagsicher mit einem Druckentlastungselement 31 verschlossen.

Ein zweites Modul 102 des Baukastensystems 100 dient der Verbindung von zwei benachbarten, in einer Längsrichtung hintereinander angeordneten Aufnahmetragelementen 21 in einer Ebene.

Ein drittes Modul 103 des Baukastensystems 100 dient der Verbindung von zwei benachbarten, über Eck angeordneten Aufnahmetragelementen 21 in einer Ebene. Das zweite Modul 102 und das dritte Modul 103 bilden ebenfalls Tragelemente 21 des Rahmens 20. Das zweite Modul 102 und das dritte Modul 103 können erste Verbindungskanalabschnitte 50a aufweisen, um die Tragelementinnenräume 26 von benachbarten Tragelementen 21 einer Ebene miteinander zu verbinden. Die Verbindung zwischen benachbarten Tragelementinnenräumen 26 sind vorzugsweise zünddurchschlagsicher zum Innenraum 12 des Gehäuses 10, so dass eine Explosion im Zwischenvolumen 30 nicht in den Innenraum 12 des Gehäuses 10 durchzünden kann. Die verbundenen Aufnahmetrageelemente 21 einer Ebene bilden einen ebenen, zweidimensionalen ersten Rahmenabschnitt 22a. Mit denselben zweiten und dritten Modulen 102, 103 können weitere Aufnahmetragelemente 21 über zweite Verbindungskanalabschnitte 50 in einer weiteren parallelen Ebene zu einem ebenen, zweidimensionalen zweiten Rahmenabschnitt 22b zünddurchschlagsicher verbunden sein. Die zweiten und dritten Module 102, 103 weisen Verbindungsstege 51 auf. In einem zweiten bzw. dritten Modul 102, 103 verbindet ein Verbindungssteg 51 den ersten Verbindungskanalabschnitt 50a starr mit dem zweiten Verbindungskanalabschnitt 50b. Die Rahmenabschnitte 22a, 22b sind über die Verbindungsstege 51 der zweiten und dritten Module 102, 103 zu einem dreidimensionalen, skelettartigen Rahmen 20 verbunden. Die zweiten und dritten Module 102, 103 können mit den angrenzenden Aufnahmetrageelementen 21 vom ersten Modultyp 101 beispielsweise schweiß- und/oder klebeverbunden sein.

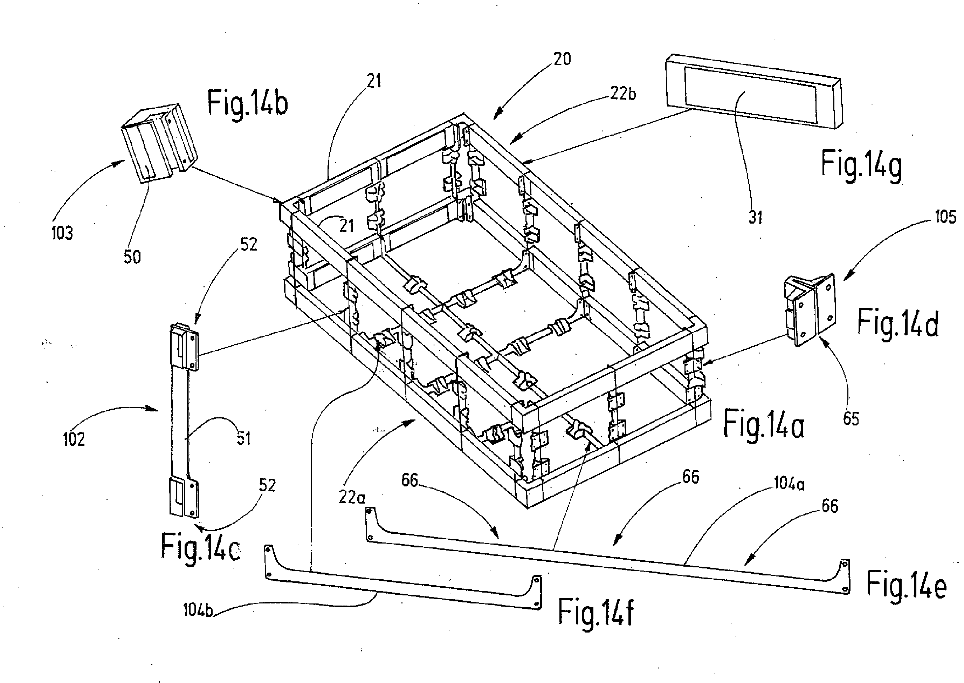

Ein längliches, stegartiges viertes Modul 104 des Baukastensystems 100 ist dazu eingerichtet, gegenüberliegende Tragelemente vom zweiten Modultyp 102 innerhalb des ersten Rahmenabschnitts 22a zu verbinden, so dass ein korbförmiger dreidimensionaler Rahmen 20 erhalten wird, wie er in Figur 11a dargestellt ist. Das vierte Modul 104 und die gegenüberliegenden zweiten Module 102 können beispielsweise jeweils mit einer Schraubenverbindung verbunden sein. Der entsprechende Abschnitt des zweiten Moduls zum Verschrauben ist Figur 10b verdeckt. Ein entsprechender Abschnitt zum Verschrauben 52 ist in Figur 14c anhand eines weiteren Ausführungsbeispiels eines Baukastenmoduls veranschaulicht.

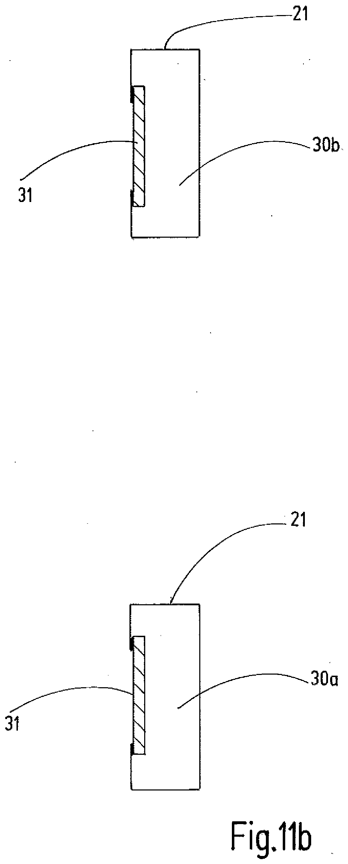

Der ebene erste Rahmenabschnitt 22a und der ebene zweite Rahmenabschnitt 22b des aus den Modulen 101, 102, 103, 104 des Baukastensystems 100 zusammengesetzten korbartigen Rahmens 20 gemäß Figur 11a weisen je ein zusammenhängendes Zwischenvolumen 30a, 30b gebildet aus den Tragelementinnenräumen 26 der Aufnahmetragelemente 21 und den Innenräumen der Verbindungskanalabschnitte 50a, 50b auf. Figur 11b zeigt zur Veranschaulichung einen Schnitt durch die Schnittebene S in Figur 11a. Die Zwischenvolumina 30a, 30b sind untereinander nicht direkt verbunden, so dass Gas von einem Zwischenraum 30a zu dem anderen Zwischenraum 30b den Umweg durch den Innenraum 26 des Gehäuses 10 nehmen müsste.

Das Baukastensystem 100 erlaubt, aus den vier Grundtypen 101, 102, 103, 104 von Baukastenmodulen, wie in den Figuren 10a-10d dargestellt, unterschiedlich lange korbartige Rahmen 20 herzustellen.

Das zweite Modul 101, das dritte Modul 103 und das vierte Modul 104 können in der Länge - und ggf. in der Anzahl der Verbindungsabschnitte 53 zur Verbindung mit Flächenelementen 37 bis 39 - angepasst bereitgestellt werden, um unterschiedlich breite und/oder unterschiedlich tiefe Rahmen 20 herstellen zu können. Für das Baukastensystem 100 ist vorzugsweise vorgesehen, dass die Länge des ersten Moduls 101 nicht variiert wird, sondern dieses bildet ein Gleichteil, von welchem unterschiedliche Anzahlen in einer Breitenrichtung und/oder in einer Längenrichtung angeordnet werden, um unterschiedlich breite und/oder lange Rahmen 20 herzustellen.

Die Verbindung der Flächenelemente 37 bis 40 zum Schließen des Gehäuses 10 mit dem Rahmen 20 kann über flächige Verbindungsabschnitte 53 erfolgen. Das zweite Modul 102 und/oder das vierte Modul 104 können beispielsweise Verbindungsabschnitte 53 aufweisen, wie es in dem Ausführungsbeispiel gemäß Figuren 10b bis 10d dargestellt ist. Die Verbindungsabschnitte 53 des zweiten Moduls 102 und des vierten Moduls 104 stellen bevorzugt je eine ebene fleckenförmige, z.B. rechteckig, insbesondere quadratische, Verbindungsfläche 54 bereit, um mit dem Flächenelementen 37, 39 fleckenförmige Verbindungsbereiche zu bilden. Das dritte Modul 103 weist winkelförmige Verbindungsabschnitte 55 auf. Alternativ oder zusätzlich können Verbindungsabschnitte 53, 55 von den zweiten, dritten und/oder vierten Modulen 102, 103, 104 gesonderte Module des Baukastensystems 100 sein. Ein entsprechendes Ausführungsbeispiel ist in den Figuren 14c und 14d dargestellt. Der Verbindungssteg 51 des zweiten, dritten bzw. vierten Moduls 102, 103, 104 ist in solchen Ausführungsformen bei hergestellter Verbindung zwischen dem gesonderten Modul, welches die Verbindungsfläche 54, 56 bereitstellt, und dem Flächenelement 37, 38, 39 angeordnet.

Die Verbindungsabschnitte 53, 55 sind von dem Innenraum 12 des Gehäuses 10 bzw. des Rahmens 20 zugänglich, so dass eine Verschraubung mit den Flächenelementen 37 bis 39 von dem Innenraum 12 her erfolgen kann. Alternativ oder zusätzlich zu einer Schraubverbindung können Verbindungsflächen 54, 56 der Verbindungsabschnitte 53, 55 mit dem Flächenelement 37, 38, 39 verklebt und/oder verschweißt sein. Eine reine Schraubverbindung wird gegenüber einer reinen Schweiß- und/oder Klebverbindung auf Grund der potentiell höheren Festigkeit bevorzugt.

Die voneinander gesonderten Verbindungsflächen 54, 56 sind fleckenförmig eben, z.B. quadratisch wie in dem dargestellten Ausführungsbeispiel, oder gewinkelt. Dies hat gegenüber einer Variante mit Verbindungsflächen, welche als ein Streifen in Längserstreckung des zweiten, dritten bzw. vierten Moduls 102, 103, 104 zusammenhängen, den Vorteil, dass damit grobe Toleranzen des Flächenelements 37, 38, 39 und/oder des Moduls 102, 103, 104 eher ausgeglichen werden können.

Auch wenn eine Schraubenverbindung zwischen den Verbindungsabschnitten 53, 55 und dem Flächenelement 37, 38, 39 vorgesehen ist, deren Bohrungen das Flächenelement 37, 38, 39 durchbrechen, muss trotzdem Zünddurchschlagsicherheit des Gehäuses 10 gewährleistet sein. Dies kann, wie in dem dargestellten Ausführungsbeispiel, durch Sicherstellen eines ausreichend langen Gewindespalts zwischen Außen und Innengewinde in der Bohrung erfolgen.

Die Flächenelemente weisen dazu bevorzugt ein Grundmaterial 60 aus Blech mit konstanter dünner Wandstärke auf, welches Ausmaße aufweist, die Seite des Gehäuses 10 vollständig zu schließen. Auf das Blech 60 sind an der Außenseite streifenförmige (wie dargestellt) oder alternativ fleckenförmige Verstärkungsblechabschnitte 61 befestigt, z.B. auf das Grundmaterial 60 aufgeklebt und/oder aufgeschweißt. Die Dicke des Verstärkungsblechabschnitts 61 allein oder zusammen mit der Dicke des Grundmaterials 60 ist ausreichend bemessen, um für die Zünddurchschlagsicherheit einen zünddurchschlagsicheren Gewindespalt bereitzustellen. Das Anbringen der Verstärkungsblechabschnitte 61 außen hat den Vorteil, dass bei einer Explosion im Innenraum 12 des Gehäuses 10 das Grundmaterial 60 gegen die Verstärkungsblechabschnitte 61 gedrückt wird. Auf die Festigkeit der Verbindung zwischen Verstärkungsblechabschnitt 61 und Grundmaterial 60 kommt es daher weniger an, als wenn der Verstärkungsblechabschnitt 61 auf der Innenseite des Grundmaterials 60 im Innenraum 12 angeordnet wäre.

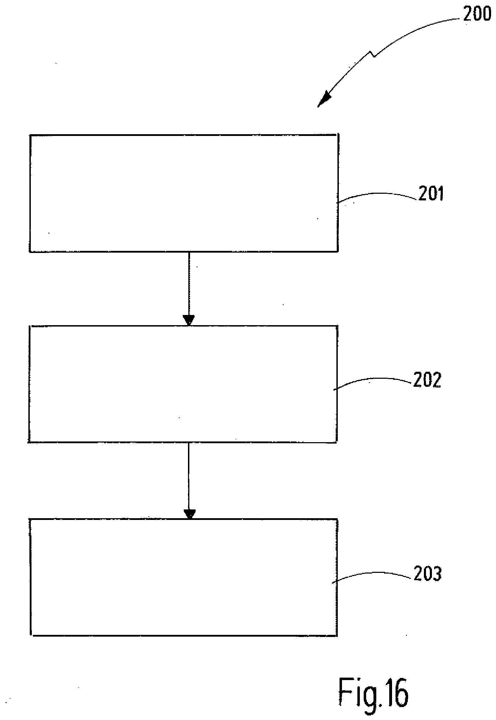

Bei der Herstellung eines erfindungsgemäßen Rahmens 20, beispielsweise mittels des Baukastensystems 100 aus Figuren 10a bis 10d, kann wie folgt vorgegangen werden, wobei dies schematisch in dem Ablaufschema eines Ausführungsbeispiels des erfindungsgemäßen Verfahrens 200 gemäß Figur 16 dargestellt ist: Elemente 101, 102, 103, 104, 21 können derart aneinander fixiert werden (Schritt 201), so dass ein Ausrichten des Rahmens 20 oder einer Teilstruktur des Rahmens 20 noch möglich ist. Es kann der Rahmen 20 oder die Teilstruktur ausgerichtet (Schritt 202) und die Ausrichtung fixiert (Schritt 203) werden. Das Fixieren 201 von Elementen und Ausrichten 202 kann schrittweise erfolgen, indem zunächst Teilstrukturen des Rahmens durch Fixieren der Elemente 201, Ausrichten der Teilstruktur und Fixieren der Ausrichtung erstellt und anschließend weitere Elemente hinzugefügt werden, die dadurch entstehenden Teilstruktur ausgerichtet und die Ausrichtung fixiert wird. Alternativ können zunächst alle Elemente fixiert werden, um den Rahmen zu bilden. Dann wird der Rahmen ausgerichtet und darauffolgend die Ausrichtung fixiert. In beiden Fällen können mit dem Ausrichten relativ grobe Toleranzen der Bauteile des Rahmens 20 ausgeglichen werden. Nach dem Ausrichten der Rahmenteilstrukturen oder des Rahmens 20 können die Elemente aneinander starr fixiert werden, um die Ausrichtung der Rahmenteilstruktur bzw. des Rahmens 20 zu fixieren und schließlich den Tragrahmen 20 fertigzustellen.

Anschließend können die Flächenelemente 37, 38, 39 an den Verbindungsabschnitten 53, 55 befestigt werden. Die Flächenelemente 37, 38, 39 werden entlang der Kanten des Gehäuses 10 miteinander dicht verschweißt und/oder verklebt. Mit den Flächenelementen 37, 38 wird ein Flansch 45 verschweißt und/oder verklebt, welcher der Verbindung zwischen Flächenelementen 37, 38 und Deckel 40 dient. Der Flansch 45 kann, ebenso wie in dem Ausführungsbeispiel gemäß Figur 5 beispielsweise aus länglichen Profilen, beispielsweise Reckeckhohlprofilen, hergestellt sein. Zwischen Flansch 45 und Deckel 40 wird bevorzugt ein Flachspalt ausgebildet, um Zünddurchschlagsicherheit an dieser Stelle zu gewährleisten.

Es sei bemerkt, dass, wenn in dieser Anmeldung von einem Deckel 16 gesprochen wird, dies nicht notwendigerweise bedeutet, dass das Gehäuse 10 in einer Orientierung einzusetzen bestimmt ist, in welcher der Deckel 16 eine Öffnung nach oben schließt.

Figur 12 beispielsweise zeigt ein Gehäuse 10, welches einen Rahmen 20 mit Modulen 101, 102, 103, 104 aus dem Baukastensystem 100 gemäß Figuren 10a bis 10d aufweist und eine Beplankung aus den Flächenelementen 37 bis 39. An einem Flächenelement 38 sind Füße 60 angeordnet, auf welchem das Gehäuse 10 stehen kann. Zum Schließen des Gehäuses kann beispielsweise der Deckel 16 des Ausführungsbeispiels gemäß Figur 5 verwendet werden, wie im Zusammenhang mit Figur 6 beschrieben.

In der Oberseite des Gehäuses 10 gemäß Figur 12 sind Ausblasöffnungen 17 vorgesehen, um das erste Zwischenvolumen 30a und das zweite Zwischenvolumen 30b mit der Umgebung 11 des Gehäuses 10 zu verbinden. Die Ausblasöffnungen 17 können mit Berstscheiben verschlossen sein. Das Baukastensystem 100 kann ein zu den Modulen gemäß Figur 11a zusätzliches fünftes Modul (nicht dargestellt) aufweisen, welches ein Aufnahmetragelement 21 mit einer Öffnung zum Bilden einer Ausblasöffnung 17 ist. Alternativ oder zusätzlich können Exemplare des ersten Moduls 101 mit entsprechender Orientierung der Öffnung 27 ein Aufnahmetragelement 21 mit einer Ausblasöffnung bilden. Alternativ oder zusätzlich kann bei der Verwendung des Baukastensystems 100 vorgesehen sein, dass Ausblasöffnungen in Exemplaren des ersten Moduls 101 geschaffen, beispielsweise herausgetrennt oder freigelassen, werden müssen.

Ausführungsformen von erfindungsgemäßen Baukastensystemen weisen Module 101, 102, 103, 104 aus den Werkstoffen Stahl, Aluminium oder Kunststoff auf und können zur Herstellung eines Tragrahmens 20 für eine Beplankung aus Stahl-, Aluminium- oder Kunststoffplatten bilden.

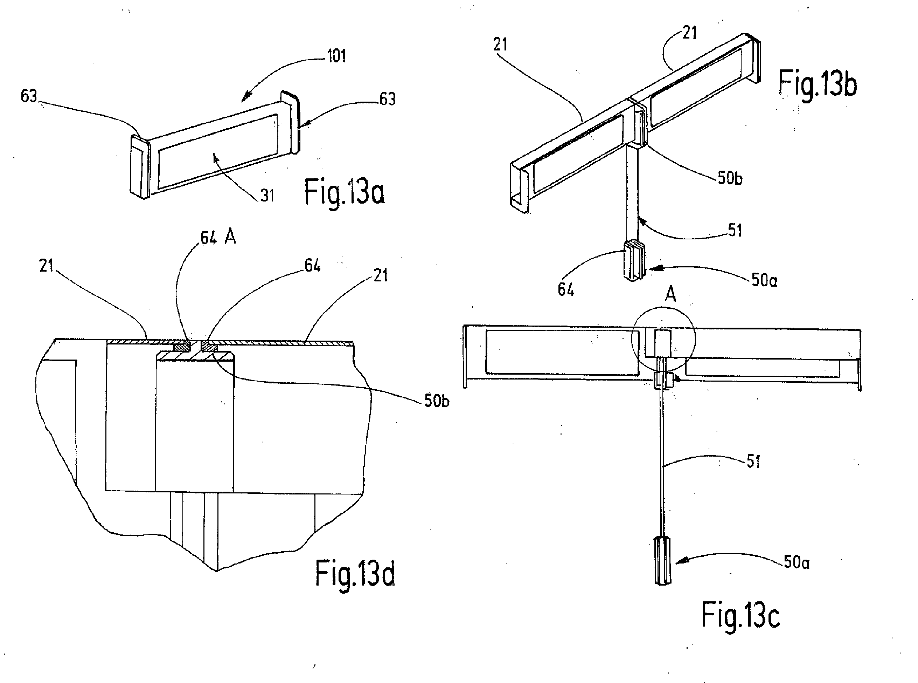

Die Figuren 13a bis 13d veranschaulichen eine Variante der Ausführungsform des Baukastensystem 100 gemäß Figuren 10a bis 12. Das erste Modul 101 weist wie das erste Modul gemäß Figur 10a ein Hohlprofil als Grundkörper und, im Unterschied zu dem Ausführungsbeispiel gemäß Figur 10a, aufgeschweißte und/oder -geklebte Flanschabschnitte 63 auf, welche mittels Öffnungen für eine Schraubverbindung von zwei benachbarten Aufnahmetragelementen 21 eingerichtet sind. Vorteil der Ausführungsform gemäß Figur 13a - 13d ist, dass die Schweißverbindung zur Befestigung der Flanschabschnitte 63 hergestellt werden kann, ohne, dass die Aufnahmetragelemente 21 bereits zu einem Rahmen 20 zusammengesetzt sind. Die Aufnahmetragelemente 21 können mittels der Schraubverbindung nach dem Zusammensetzen und Ausrichten der zusammengesetzten Aufnahmetragelemente 21 aufeinander zu gedrückt werden, wobei ein zweites Modul 102, welches im Wesentlichen der Ausführungsform, wie im Zusammenhang mit Figur 10b beschrieben, entspricht, zwischen benachbarten Aufnahmetragelementen 21 eingeklemmt wird. Dabei werden Abschnitte des ersten Moduls 101, des zweiten Moduls 102 oder zusätzliche Elemente, welche als Dichtabschnitte 64 oder Dichtelemente 64 bezeichnet werden können, verformt, um zwischen benachbarten Aufnahmetragelementen 21 vorhandene Spalte zumindest so zu schließen, dass Gas und/oder Partikel das Zwischenvolumen durch die Spalte allenfalls zündunfähig verlassen kann. Das zweite Modul 102 kann unabhängig davon ein Gussteil sein. Die Gestaltung des zweiten Moduls 102 (s. auch das Ausführungsbeispiel gemäß Figur 14c) ausschließlich mit Öffnungen, welche in eine einzige Richtung orientiert sind, macht dies mit einem einfachen Werkzeug möglich.

In Figur 14a ist perspektivisch ein erfindungsgemäßer Rahmen 20, hergestellt mit einer Abwandlung des Baukastensystems 100 gemäß Figur 10a bis 12, dargestellt. Baukastenmodule 101 bis 104b sind in den Figuren 14b bis 14f dargestellt. Eckmodule 103 mit Verbindungssteg 51, wie in Figur 10c dargestellt, sind in diesem Baukastensystem 100 nicht vorhanden. Stattdessen verbinden Winkelmodule 103 (s. Figur 14b), welche einen Verbindungskanalabschnitt 50 aufweisen, in einem ebenen Rahmenabschnitt 22a bzw. 22b benachbarte Aufnahmetragelemente 21, aus denen der Rahmen 20 aufgebaut ist, über Eck, ohne den ebenen ersten Rahmenabschnitt 22a und den ebenen zweiten Rahmenabschnitt 22b miteinander zu verbinden. Das zweite Module 102 gemäß Figur 14c unterscheidet sich von dem zweiten Module 102 dargestellt in Figur 10b darin, dass dem zweiten Modul 102 gemäß Figur 14c ein Verbindungsabschnitt 53 fehlt. Dieser wird wie Figur 14d veranschaulicht, von einem von den zweiten und vierten Modulen 102, 104a, 104b (Figuren 14c, 14e und 14f) gesonderten Modul 105 gebildet, welches eine schlitzförmige Aufnahme 65 aufweist, in welchem das zweite bzw. das vierte Modul 102, 104a, 104b aufgenommen wird.

Das vierte Modul 104 kann in wenigstens zwei Varianten 104a, 140b vorhanden sein, welche in Längsrichtung des Rahmens bzw. in Querrichtung des Rahmens 20 gegenüberliegende Exemplare von zweiten Modulen 102 verbinden. Eine Variante 104a des vierten Moduls kann mittels Formschlussabschnitten 66 (z.B. Kerben) dazu eingerichtet sein, bestimmte Positionen für die Exemplare der in Querrichtung orientierten Variante 104b des vierten Moduls entlang der Länge des Exemplars des vierten Moduls 104a festzulegen, welches in Längsrichtung orientiert ist.

Ansonsten kann die Beschreibung zu der Ausführungsform gemäß Figuren 1 bis 12 zur Beschreibung von Einzelheiten eines Rahmens 20, aufgebaut wie aus Figur 14a bis 14g ersichtlich, herangezogen werden. Insbesondere kann das erste Modul 101, d.h. das Aufnahmetragelement 21, wie im Zusammenhang mit der Ausführungsform gemäß Figuren 10a bis 12 beschrieben ausgebildet sein. Die Abwandlung gemäß Figur 13a bis 13d kann auch in einem Ausführungsbeispiel entsprechend Figur 14a bis 14g verwendet werden.

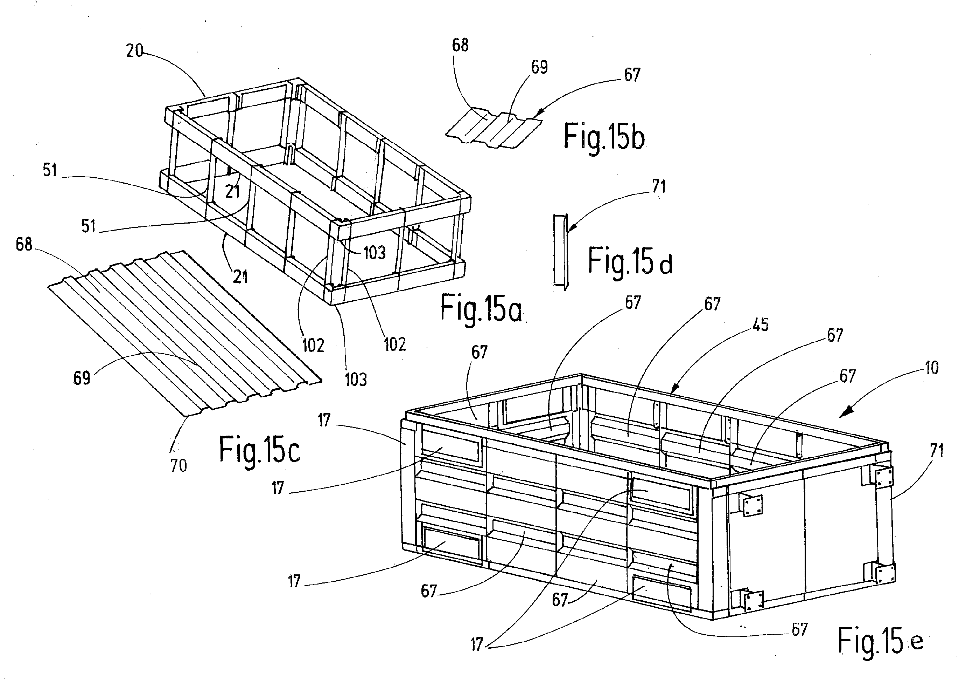

Die Figuren 15a bis 15e veranschaulichen ein Beispiel einer Abwandlung des Rahmens 20 gemäß Figuren 14a bis 14g und ein damit gebildetes explosionsgeschütztes Gehäuse 10 der Schutzart druckfeste Kapselung. Die Ausführungsform des Baukastensystems 100, aus welchem der Rahmen 20 gemäß Figur 15a aufgebaut ist, kommt ohne das vierte Modul 104, 104a, 104b zur Verbindung gegenüberliegender zweiter Module 102 aus und ohne Verbindungsabschnitte 53, 55 zum Verschrauben mit dem Flächenelement 37, 38, 39. Die Zellen bzw. Öffnungen, welche von zwei benachbarten Verbindungsstegen 51 und dazwischen angeordneten Aufnahmetragelementen 21 gebildet sind, sind dazu vorgesehen, durch Blechelemente 67 (s. Figur 15b) geschlossen zu werden, in denen das Blech geformt ist, um abwechselnd Tiefsicken 68 und Hochsicken 69 auszubilden. Die Längserstreckungsrichtung der Tief- und Hochsicken 68, 69 ist vorzugsweise parallel zur Längserstreckungsrichtung der Aufnahmetragelemente 21 oder quer zur Längserstreckungsrichtung der Verbindungsstege 51 orientiert. Bevorzugt sind die Blechelemente 67 Trapezblechelemente, was in Abschnitten gerade Schweißnähte und/oder Klebenähte zwischen dem Trapezblech und angrenzenden Verbindungsstegen 51 der Exemplare der Module 102 möglich macht. Jedes Blechelement 67 ist in der Zelle bzw. Öffnung angeordnet, der das Blechelement 67 zugeordnet ist. Das Blechelement 67 ist mit den benachbarten zweiten Modulen 102, welches beispielhaft in Figur 14c dargestellt sind, und den parallelen Aufnahmetragelementen 21 verbunden, beispielsweise mittels einer Schweiß- und/oder Klebeverbindung.

Das Gehäuse 10 kann, wie beispielsweise das Gehäuse 10 gemäß Figur 12, Ausblasöffnungen 17 an der Oberseite aufweisen und/oder, wie in Figur 15e dargestellt, seitliche Ausblasöffnungen 17. Diese sind durch entsprechende Ausnehmungen in seitlichen Aufnahmetragelementen 21 und dem Blechelement 67 gebildet, das die Zelle schließt, die die Aufnahmetragelemente 21 begrenzen.

Auch wenn die zweiten Module 102 in dem Rahmen gemäß Figur 15a, wie beispielhaft in Figur 14c gezeigt, Vorrichtungen 52 zum Verschrauben mit vierten Modulen 104 aufweisen können, sind diese zur Stabilisierung des Flächenelements 39, welches die Rückwand bildet, vorzugsweise nicht erforderlich. Das Flächenelement 39 ist bevorzugt kein ebenes Blechelement, sondern ein Blechelement 70 mit eingeformten Tiefsicken 68 und Hochsicken 69, beispielsweise ein Trapezblechelement (s. Figur 15c). Die Längserstreckungsrichtung der Tiefsicken 68 und der Hochsicken 69 ist parallel zur Längserstreckungsrichtung des ersten Rahmenabschnitts 22a. Das Flächenelement 39 ist mit den Elementen, insbesondere Aufnahmetragelemente 21, welche den ersten Rahmenabschnitt 22a bilden, vorzugsweise verschweißt und/oder verklebt, um die durch den ersten Rahmenabschnitt 22a festgelegte Öffnung zünddurchschlagsicher zu verschließen.

Die Kantenöffnungen sind mittels eine Kante ausbildenden Eckblechen 71 (s. Figur 15d) verschlossen, welche mit den Eckmodulen 103 sowie den zweiten Modulen 104 verschweißt und/oder verklebt sind.

Die Figuren 15a bis 15e veranschaulichen ein Baukastensystem zur Herstellung eines Rahmens 20 bzw. Gehäuses, welches in Ausführungsformen vorsieht, dass seitliche Flächenelemente 37 aus einzelnen, immer gleichen Blechelementen 67, 71 aufgebaut sind.

Eine Schweißverbindung und/oder Klebeverbindung zwischen Elementen kann eine Dichtnaht bilden, welche alle Spalte zwischen den zu verbindenden Elementen schließt, um an dieser Stelle, wenn kein zündfähigen Gas oder Partikel an dieser Stelle austreten soll, auf einen zünddurchschlagsicheren Spalt, insbesondere Flachspalt, verzichten zu können. Dichtnähte können beispielsweise an den Stoßstellen zwischen Tragelementen 21 vorgesehen sein, wenn der Innenraum 12 des Gehäuses 10 zünddurchschlagsicher von dem Zwischenvolumen 30, 30a, 30b getrennt werden soll, wenn also die Innenraumöffnungen 27 in den Tragelementen 21 mit gasdurchlässigen aber zünddurchschlagsicheren Druckentlastungskörpern 31 verschlossen sind.

Während die Figuren Ausführungsbeispiele von Rahmen 20 und Gehäusen 10 zeigen, welche quaderförmig sind, können Ausführungsformen erfindungsgemäßer Rahmen 20 oder Gehäuse 10 Innenräume 12 über wenigstens eine Ecke begrenzen. Beispielsweise kann ein erfindungsgemäßes Gehäuse 10 einen L-förmigen Gehäuseinnenraum 12 umgrenzen. Ausführungsformen von Baukastensystemen 100 sind möglich, welche das wahlweise Bereitstellen von Gehäusen mit quaderförmigen Innenräumen 12 oder Innenräumen 12, welche von dem Gehäuse 10 über Eck begrenzt werden, beispielsweise L-förmige oder U-förmige Innenräumen 12, ermöglichen.

Die dargestellten Ausführungsformen der Rahmen 20 bilden Endoskelette, denn die Flächenelemente sind außen auf Rahmenelementen befestigt. Alternativ kann der Rahmen ein Exoskelett oder Korsett bilden, in welchem die Flächenelemente 37 bis 39 einen Innenraum 12 schließen und gegen welche die Flächenelemente 37 bis 39 im Falle einer Explosion nach außen gedrängt werden.

Erfindungsgemäß wird ein Rahmen 20 für explosionsgeschützte Gehäuse 10 angegeben. Der Rahmen 20 ist aus Tragelementen 21 zusammengesetzt. Bevorzugt werden als Tragelemente 21 Vierkantrohre verwendet, die mit länglichen rechteckigen Öffnungen 27 versehen sind, welche bevorzugt durch aufgeschweißte oder anderes befestigte zünddurchschlagsichere Gitter 31 verschlossen werden. Die Vierkantrohre 21 der Ausführungsform sind zu einem skelettartigen Rahmen 20 verbunden, welcher die Gehäusekonstruktion trägt (Tragrahmen). Auf die Außenseite des Rahmens 20 werden vorzugsweise Metallplatten 37 bis 40 (zum Beispiel Edelstahl oder Aluminium) oder auch Kunststoffplatten durch Verkleben und/oder Verschweißen befestigt, damit das Gehäuse 10 verschlossen. An geeigneten Stellen des Gehäuses 10, wie zum Beispiel am Boden 15 oder an den Stirnseiten 14 sind vorzugsweise Ausblasöffnungen 17 vorgesehen, welche mit zünddurchschlagsicheren Gittern 31 verschlossen werden können. Erfindungsgemäß werden mittels des tragenden und stabilisierenden Tragrahmens 20, welcher gleichzeitig zum Druckabbau beiträgt, dünne Wandstärken der Flächenelemente 37 bis 40, beispielsweise Platten, sowie große Gehäuseabmaße bei gleichzeitiger Sicherstellung einer druckfesten Kapselung möglich.

**Bezugszeichenliste:**

| | |
|---|---|
| 10 | Gehäuse |
| 11 | Umgebung |
| 12 | Gehäuseinnenraum |
| 13 | Längsseite |
| 14 | Stirnseite |
| 15 | Boden |
| 15a | Stützrahmen |
| 15b | Stützrahmenelement |
| 16 | Deckel |
| 16a | Stützrahmen |
| 16b | Stützrahmenelement |
| 17 | Ausblasöffnung |
| 18 | Druckentlastungskörper |
| 20 | Rahmen |
| 21 | Tragelement |
| 21a | Stütze |
| 21b | Holm |
| 22a | erste Ebene/erster Rahmenabschnitt |
| 22b | zweite Ebene/zweiter Rahmenabschnitt |
| 24 | Längsseiten |
| 25 | Stirnseiten |
| 26 | Tragelementinnenraum |
| 27 | Öffnung (Innenraumöffnung) |
| 28 | stirnseitige Anschlussöffnung |
| 29 | Längsseitige Anschlussöffnung |
| 30 | Zwischenvolumen/Strömungskanal |
| 30a | Zwischenvolumen |
| 30b | Zwischenvolumen |
| 31 | Druckentlastungskörper |
| 33 | Wand |
| 36 | Ausnehmung |
| 37 | Flächenelement |
| 38 | Flächenelement |
| 39 | Flächenelement |
| 40 | Flächenelement |
| 41 | Naht, Stelle |
| 42 | Dichtnaht |
| 43 | Ausnehmung |
| 45 | Flansch |
| 46 | Gewindebohrung |
| 47 | Zwischenplatte |
| 49 | Randbereich |
| 50 | Verbindungskanalabschnitt |
| 50a | Verbindungskanalabschnitt |
| 50b | Verbindungskanalabschnitt |
| 51 | Verbindungssteg |
| 52 | Abschnitt zum Verschrauben |
| 53 | Verbindungsabschnitt |
| 54 | Verbindungsfläche |
| 55 | Verbindungsabschnitt |
| 56 | Verbindungsfläche |
| 60 | Grundmaterial |
| 61 | Verstärkungsblechabschnitt |
| 62 | Fuß |
| 63 | Flanschabschnitt |
| 64 | Dichtabschnitt |
| 65 | Aufnahme |
| 66 | Formschlussabschnitt |
| 67 | Blechelement |
| 68 | Tiefsicke |
| 69 | Hochsicke |
| 70 | Blechelement |
| 71 | Eckblech |
| 100 | Baukastensystem |
| 101 | Erstes Modul |
| 102 | Zweites Modul |
| 103 | Drittes Modul |
| 104 | Viertes Modul |
| 104a | Erste Variante |
| 104b | Zweite Variante |
| 105 | Fünftes Modul |
| 200 | Verfahren |
| 201 | Schritt |
| 202 | Schritt |
| 203 | Schritt |
| L | Längserstreckungsrichtung |

## Patentansprüche

1. Rahmen (20) für ein explosionsgeschütztes Gehäuse (10), welches einen Gehäuseinnenraum (12) zur Aufnahme von Betriebsgeräten umgrenzt, welche Zündfunken bilden können, wobei der Rahmen (20) Tragelemente (21, 21a, 21b) aufweist, wobei von den Tragelementen (21, 21a, 21b) wenigstens eines - ein Aufnahmetragelement (21, 21a, 21b) - einen Tragelementinnenraum (26) begrenzt und wobei wenigstens eines der Aufnahmetragelemente (21, 21a, 21b) eine Öffnung (27) begrenzt, durch welche der Gehäuseinnenraum (12) mit dem Tragelementinnenraum (26) fluidisch verbunden ist, **dadurch gekennzeichnet, dass** der Rahmen (20) eine Ausblasöffnung (17) festlegt, durch welche der Gehäuseinnenraum (12) mit der Umgebung (11) des Gehäuses (10) zünddurchschlagsicher fluidisch verbunden ist, wobei der Gehäuseinnenraum (12) über wenigstens einen Tragelementinnenraum (26) über die Ausblasöffnung (17) mit der Umgebung (11) des Gehäuses (10) zünddurchschlagsicher fluidisch verbunden ist.

2. Rahmen (20) nach Anspruch 1, wobei Tragelementinnenräume (26) von Aufnahmetragelementen (21, 21a, 21b) untereinander fluidisch verbunden sind, so dass ein Gasaustausch zwischen Tragelementinnenräumen (26) möglich ist.

3. Rahmen (20) nach Anspruch 2, wobei die verbundenen Tragelementinnenräume (26) einen unverzweigten oder ein- oder mehrfach verzweigten Kanal bilden.

4. Rahmen (20) nach einem der vorstehenden Ansprüche, wobei die Ausblasöffnung (17) mit einem Druckentlastungskörper (18) zünddurchschlagsicher verschlossen ist.

5. Rahmen (20) nach Anspruch 4, wobei wenigstens ein Tragelement (21, 21a, 21b), beispielsweise ein Tragelement (21, 21a, 21b), welches eine oder keine Öffnung (27) aufweist, eine Ausblasöffnung (17) festlegt.

6. Rahmen (20) nach einem der vorstehenden Ansprüche, wobei Tragelemente (21, 21a, 21b) einen, bevorzugt zünddurchschlagsicheren, Mantel aufweisen, mit welchem das Tragelement (21, 21a, 21b) den Tragelementinnenraum (26) quer zur Längserstreckungsrichtung (L) des Tragelements (21, 21a, 21b) begrenzt.

7. Rahmen (20) nach einem der vorstehenden Ansprüche, wobei die Öffnung (27) und/oder die Ausblasöffnung (17) mit einem Druckentlastungskörper (31, 18), z.B. einem Gitter oder einer Gitteranordnung, zünddurchschlagsicher geschlossen ist.

8. Explosionsgeschütztes Gehäuse (10) mit einem Rahmen (20) nach einem der vorstehenden Ansprüche.

9. Gehäuse (10) nach Anspruch 8, wobei das Gehäuse (10) eine Ausblasöffnung (17) festlegt, durch welche der Gehäuseinnenraum (12) mit der Umgebung (11) des Gehäuses (10) zünddurchschlagsicher fluidisch verbunden ist.

10. Gehäuse (10) nach Anspruch 8 oder 9, wobei an dem Rahmen (20) Flächenelemente (37, 38, 39, 40) befestigt sind, um das Gehäuse (10) zu schließen.

11. Gehäuse (10) nach Anspruch 10, wobei die Flächenelemente (37, 38, 39, 40) plattenförmig sind.

12. Gehäuse (10) nach einem der Ansprüche 10 bis 11, wobei Flächenelemente (37, 38, 39, 40) mit dem Rahmen (20) verschweißt und/oder verklebt sind.

13. Gehäuse (10) nach einem der Ansprüche 10 bis 12, wobei aneinander angrenzenden Flächenelemente (37, 38, 39, 40) miteinander verbunden, insbesondere verschweißt oder verklebt, sind.

14. Gehäuse (10) nach einem der Ansprüche 10 bis 13 mit einer gebogenen oder abgekanteten Platte zum Schließen wenigstens zweier Seiten (13, 14, 15) des Gehäuses (10), welche einen Winkel von z.B. 90 Grad einschließen.

15. Gehäuse (10) nach einem der Ansprüche 8 bis 14, wobei der Rahmen (20) und die Flächenelemente (37, 38, 39, 40) aus gleichem Material sind.

16. Verfahren (200) zum Herstellen eines Rahmens nach einem der Ansprüche 1 bis 9 mit den Schritten: Anordnen (201) von Tragelementen (21) zu dem Rahmen (20) oder wenigstens einer Teilstruktur des Rahmens (20) und befestigen der Tragelemente (21), Ausrichten (202) des Rahmens (20) oder der Teilstruktur und Verbinden der Tragelemente (21), um die Ausrichtung zu fixieren (203).

## Claims

1. A frame (20) for an explosion-proof housing (10) which encloses a housing interior space (12) for accommodating operating equipment that can form ignition sparks, wherein the frame (20) comprises support elements (21, 21a, 21b), wherein at least one of the support elements (21, 21a, 21b) - a receiving support element (21, 21a, 21b) - delimits a support element interior space (26) and wherein at least one of the receiving support elements (21, 21a, 21b) delimits an opening (27) through which the housing interior space (12) is fluidically connected to the support element interior space (26), **characterized in that** the frame (20) defines a venting opening (17) through which the housing interior space (12) is fluidically connected to the surrounding area (11) of the housing (10) in a flameproof manner, wherein the housing interior space (12) is fluidically connected to the surrounding area (11) of the housing (10) in a flameproof manner via at least one support element interior space (26) via the venting opening (17) .

2. The frame (20) according to claim 1, wherein support element interior spaces (26) of receiving support elements (21, 21a, 21b) are fluidically connected to one another, so that a gas exchange between support element interior spaces (26) is possible.

3. The frame (20) according to claim 2, wherein the connected support element interior spaces (26) form a channel that is unbranched or branched once or multiple times.

4. The frame (20) according to anyone of the preceding claims, wherein the venting opening (17) is closed by a pressure relief body (18) in a flameproof manner.

5. The frame (20) according to claim 4, wherein at least one support element (21, 21a, 21b), for example a support element (21, 21a, 21b) that has one or no opening (27), defines a venting opening (17).

6. The frame (20) according to anyone of the preceding claims, wherein support elements (21, 21a, 21b) comprise a preferably flameproof shell by way of which the support element (21, 21a, 21b) delimits the support element interior space (26) transversely to the longitudinal extension direction (L) of the support element (21, 21a, 21b) .

7. The frame (20) according to anyone of the preceding claims, wherein the opening (27) and/or the venting opening (17) is closed by a pressure relief body (31, 18), for example a grille or a grille arrangement, in a flameproof manner.

8. An explosion-proof housing (10) comprising a frame (20) according to anyone of the preceding claims.

9. The housing (10) according to claim 8, wherein the housing (10) defines a venting opening (17) through which the housing interior space (12) is fluidically connected to the surrounding area (11) of the housing (10) in a flameproof manner.

10. The housing (10) according to claim 8 or 9, wherein surface elements (37, 38, 39, 40) are attached to the frame (20) in order to close the housing (10).

11. The housing (10) according to claim 10, wherein the surface elements (37, 38, 39, 40) are plate-shaped.

12. The housing (10) according to anyone of claims 10 to 11, wherein surface elements (37, 38, 39, 40) are welded and/or bonded to the frame (20).

13. The housing (10) according to anyone of claims 10 to 12, wherein adjacent surface elements (37, 38, 39, 40) are connected to one another, in particular welded or bonded.

14. The housing (10) according to anyone of claims 10 to 13, comprising a curved or folded plate for closing at least two sides (13, 14, 15) of the housing (10), which enclose an angle of 90 degrees, for example.

15. The housing (10) according to anyone of claims 8 to 14, wherein the frame (20) and the surface elements (37, 38, 39, 40) are made of the same material.

16. A method (200) for producing a frame according to anyone of claims 1 to 9, comprising the steps of: arranging (201) support elements (21) to form the frame (20) or at least a sub-structure of the frame (20), and fastening the support elements (21), aligning (202) the frame (20) or the sub-structure, and connecting the support elements (21) to fix (203) the alignment.

## Revendications

1. Cadre (20) pour un boîtier antidéflagrant (10) qui délimite un espace intérieur de boîtier (12) destiné à accueillir des appareils de commande qui peuvent générer des étincelles d'allumage, le cadre (20) présentant des éléments de support (21, 21a, 21b), sachant qu'au moins un des éléments de support (21, 21a, 21b) - un élément de support d'accueil (21, 21a, 21b) - délimite un espace intérieur d'élément de support (26), et sachant qu'au moins un des éléments de support d'accueil (21, 21a, 21b) délimite une ouverture (27) à travers laquelle l'espace intérieur de boîtier (12) est relié sur le plan fluidique à l'espace intérieur d'élément de support (26), **caractérisé en ce que** le cadre (20) définit une ouverture d'évacuation (17) à travers laquelle l'espace intérieur de boîtier (12) est relié sur le plan fluidique, de manière antidéflagrante, à l'environnement (11) du boîtier (10), l'espace intérieur de boîtier (12) étant relié sur le plan fluidique, de manière antidéflagrante, à l'environnement (11) du boîtier (10), via l'ouverture d'évacuation (17), par l'intermédiaire d'au moins un espace intérieur d'élément de support (26).

2. Cadre (20) selon la revendication 1, dans lequel des espaces intérieurs d'éléments de support (26) d'éléments de support d'accueil (21, 21a, 21b) sont reliés entre eux sur le plan fluidique, de manière à permettre un échange de gaz entre des espaces intérieurs d'éléments de support (26).

3. Cadre (20) selon la revendication 2, dans lequel les espaces intérieurs d'éléments de support (26) reliés forment un conduit dépourvu d'embranchements ou présentant un ou plusieurs embranchements.

4. Cadre (20) selon une des revendications précédentes, dans lequel l'ouverture d'évacuation (17) est fermée de manière antidéflagrante par un corps de décompression (18).

5. Cadre (20) selon la revendication 4, dans lequel au moins un élément de support (21, 21a, 21b), par exemple un élément de support (21, 21a, 21b) présentant ou non une ouverture (27), définit une ouverture d'évacuation (17).

6. Cadre (20) selon une des revendications précédentes, dans lequel des éléments de support (21, 21a, 21b) comprennent une enveloppe, de préférence antidéflagrante, avec laquelle l'élément de support (21, 21a, 21b) délimite l'espace intérieur d'élément de support (26), transversalement au sens de la dimension longitudinale (L) de l'élément de support (21, 21a, 21b).

7. Cadre (20) selon une des revendications précédentes, dans lequel l'ouverture (27) et/ou l'ouverture d'évacuation (17) est obturée de manière antidéflagrante avec un corps de décompression (31, 18), par exemple une grille ou un système de grille.

8. Boîtier antidéflagrant (10) doté d'un cadre (20) selon une des revendications précédentes.

9. Boîtier (10) selon la revendication 8, dans lequel le boîtier (10) définit une ouverture d'évacuation (17) à travers laquelle l'espace intérieur de boîtier (12) est relié sur le plan fluidique, de manière antidéflagrante, à l'environnement (11) du boîtier (10).

10. Boîtier (10) selon la revendication 8 ou 9, dans lequel des éléments plans (37, 38, 39, 40) sont fixés au cadre (20) pour fermer le boîtier (10).

11. Boîtier (10) selon la revendication 10, dans lequel les éléments plans (37, 38, 39, 40) ont la forme de plaques.

12. Boîtier (10) selon une des revendications 10 à 11, dans lequel des éléments plans (37, 38, 39, 40) sont soudés et/ou collés au cadre (20).

13. Boîtier (10) selon une des revendications 10 à 12, dans lequel des éléments plans (37, 38, 39, 40) adjacents sont reliés entre eux, et sont notamment soudés ou collés.

14. Boîtier (10) selon une des revendications 10 à 13, comprenant une plaque incurvée ou pliée pour fermer au moins deux côtés (13, 14, 15) du boîtier (10) qui forment un angle de par exemple 90 degrés.

15. Boîtier (10) selon une des revendications 8 à 14, dans lequel le cadre (20) et les éléments plans (37, 38, 39, 40) sont constitués du même matériau.

16. Procédé (200) de fabrication d'un cadre selon une des revendications 1 à 9, comprenant les étapes suivantes : mise en place (201) d'éléments de support (21) par rapport au cadre (20) ou au moins une structure partielle du cadre (20), et fixation des éléments de support (21), positionnement (202) du cadre (20) ou de la structure partielle, et assemblage des éléments de support (21) pour fixer (203) le positionnement.
